(19) **Europäisches Patentamt / European Patent Office / Office européen des brevets**

(11) **EP 3 526 033 B1**

(12) **EUROPEAN PATENT SPECIFICATION**

(45) Date of publication and mention
of the grant of the patent:
**02.12.2020  Bulletin 2020/49**

(21) Application number: **17797788.1**

(22) Date of filing: **11.10.2017**

(51) Int Cl.:
*B32B 15/08* (2006.01)     *B32B 15/085* (2006.01)
*B32B 15/20* (2006.01)     *B32B 27/08* (2006.01)
*B32B 27/30* (2006.01)     *B32B 27/32* (2006.01)

(86) International application number:
**PCT/US2017/056098**

(87) International publication number:
**WO 2018/071513 (19.04.2018 Gazette 2018/16)**

(54) **MULTILAYER STRUCTURES, ARTICLES COMPRISING THE SAME, AND METHODS OF MAKING MULTILAYER STRUCTURES**

MEHRSCHICHTIGE STRUKTUREN, DIESE BEINHALTENDE ARTIKEL UND VERFAHREN ZUR HERSTELLUNG VON MERHSCHICHTIGEN STRUKTUREN.

STRUCTURES MULTICOUCHES, ARTICLES COMPRENANT CES STRUCTURES ET PROCÉDÉS DE FABRICATION DE STRUCTURES MULTICOUCHES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2016   US 201662406978 P**

(43) Date of publication of application:
**21.08.2019   Bulletin 2019/34**

(73) Proprietor: **DOW GLOBAL TECHNOLOGIES LLC
Midland, MI 48674 (US)**

(72) Inventors:
• **HU, Yushan
Lake Jackson
TX 77566 (US)**

• **KUPSCH, Eva-Maria
CH-8810 Horgen (CH)**

(74) Representative: **Boult Wade Tennant LLP
Salisbury Square House
8 Salisbury Square
London EC4Y 8AP (GB)**

(56) References cited:
**EP-A1- 2 159 253      WO-A1-2012/044732
WO-A1-2014/043522    WO-A1-2015/102991
WO-A1-2015/123827    WO-A1-2015/123829**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 526 033 B1

**Description**

**Field**

The disclosure relates to multilayer structures, to articles comprising such multilayer structures, and to methods of making such multilayer structures.

**Introduction**

Coated metal foils are used in a number of applications including food packaging. For example, coated aluminum foil is used as lid stock for cans. Such packages are often subjected to a retort process that sterilizes food in the package to create a shelf-stable product. Polymeric films used in retort packaging must be able to withstand the high heat (typically, 121°C or more) and high humidity. When used in retortable food packaging, coated aluminum foil typically contains at least three functional layers: a sealant layer, aluminum foil and a tie layer between the sealant layer and the aluminum foil. The sealant layer is typically a polyolefin, such as polypropylene for heat resistance. The tie layer creates interlayer adhesion between the two incompatible layers (e.g., the polyolefin and the metal foil). Maleic anhydride (MAH) functionalized polyolefins, such as MAH-grafted polypropylene or MAH-grafted polyethylene, are commonly used as tie layers. With a polypropylene sealant layer, a functionalized polyolefin such as MAH-grafted polypropylene is generally used for the tie layer. However, grafting MAH onto polypropylene via reactive extrusion in the presence of peroxide causes chain scission, low grafting efficiency, and the generation of low molecular weight species. Thus, the use of MAH-grafted polypropylene can increase the melt flow rates and can provide a difficult viscosity match for film co-extrusion. In addition, washing is needed to remove polypropylene oligomers which increase the cost of production. WO2015102991 discloses a multi-layer film.

There remains a need for new multilayer structures comprising a metal foil layer that can be prepared via extrusion coating, possess desired seal strength, and have minimal shrinkage issues.

**Summary**

The present invention provides multilayer structures which advantageously provide one or more desirable properties. Multilayer structures of the present invention advantageously utilize a tie layer that couples a polypropylene layer to a metal foil layer. The polypropylene layer and tie layer can advantageously be coextruded and then extrusion coated on the metal foil layer. Such multilayer structures, in some embodiments, possess desirable seal strength and exhibit minimal undesirable shrinkage effects. In some embodiments, multilayer structures can be incorporated into packages that can be subjected to a retort process (e.g., for food packaging applications).

In one aspect, the present invention provides a multilayer structure that comprises a polyolefin layer which is Layer A, a tie layer which is Layer B, and a barrier layer which is Layer C, each layer having opposing facial surfaces, wherein Layer A has a top facial surface and a bottom facial surface and comprises polypropylene, wherein Layer B has a top facial surface and a bottom facial surface and comprises:

    a) a crystalline block copolymer composite (CBC) comprising:

        i) a crystalline ethylene based polymer (CEP) comprising at least 90 mol % polymerized ethylene,
        ii) an alpha-olefin-based crystalline polymer (CAOP); and
        iii) a block copolymer comprising (a) a crystalline ethylene block (CEB) comprising at least 90 mol % polymerized ethylene and (b) a crystalline alpha-olefin block (CAOB),

        b) maleic anhydride grafted polyethylene or maleic anhydride grafted polypropylene, and,
        c) low density polyethylene, and,

wherein Layer C comprises a metal foil and has a top facial layer and a bottom facial surface, the top facial surface of Layer C being in adhering contact with the bottom facial surface of Layer B, and the top facial surface of Layer B being in adhering contact with the bottom facial surface of Layer A; wherein Layer B comprise 40 to 75 weight percent CBC based on the total weight of Layer B, 10 to 35 weight percent maleic anhydride grafted polyethylene based on the total weight of Layer B, and 15 to 40 weight percent low density polyethylene based on the total weight of Layer B.

As discussed below, the present invention also provides packages (e.g., retortable food packages) formed from multilayer structures of the present invention, as well as methods of preparing multilayer structures of the present invention.

These and other embodiments are described in more detail in the Detailed Description.

**Brief Description of the Figures**

Figure 1 is a graph illustrating the results of the shear rheology measurements in Example 1.
Figure 2 is a graph illustrating the results of the melt strength measurements in Example 1.

**Detailed Description**

Unless stated to the contrary, implicit from the context, or customary in the art, all parts and percents are based on weight, all temperatures are in ° C, and all test methods are current as of the filing date of this disclosure.

The term "composition," as used herein, refers to a mixture of materials which comprise the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or polymer mixture.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

The term, "ethylene-based polymer," as used herein, refers to a polymer that comprises, in polymerized form, a majority amount of ethylene monomer (based on the weight of the polymer), and optionally may comprise one or more comonomers.

The term, "ethylene/$\alpha$-olefin interpolymer," as used herein, refers to an interpolymer that comprises, in polymerized form, a majority amount of ethylene monomer (based on the weight of the interpolymer), and an $\alpha$-olefin.

The term, "ethylene/$\alpha$-olefin copolymer," as used herein, refers to a copolymer that comprises, in polymerized form, a majority amount of ethylene monomer (based on the weight of the copolymer), and an $\alpha$-olefin, as the only two monomer types. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however, the following descriptions may be helpful in understanding the differences between some of these different polyethylene resins.

The term, "propylene-based polymer," as used herein, refers to a polymer that comprises, in polymerized form, a majority amount of propylene monomer (based on the weight of the polymer), and optionally may comprise one or more comonomers.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392). LDPE resins typically have a density in the range of 0.916 to 0.935 g/cm$^3$.

The term "LLDPE", includes both resin made using the traditional Ziegler-Natta catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm$^3$. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/cm³, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

"Blend", "polymer blend" means a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend.

The term "in adhering contact" means that one facial surface of one layer and one facial surface of another layer are in touching and binding contact to one another such that one layer cannot be removed for the other layer without damage to the in-contact facial surfaces of both layers.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

In one embodiment, a multilayer structure of the present invention comprises a polyolefin layer which is Layer A, a tie layer which is Layer B, and a barrier layer which is Layer C, each layer having opposing facial surfaces. In some embodiments of the multilayer structure:

Layer A has a top facial surface and a bottom facial surface and comprises polypropylene;
Layer B has a top facial surface and a bottom facial surface and comprises:

a) a crystalline block copolymer composite (CBC) comprising:

i) a crystalline ethylene based polymer (CEP) comprising at least 90 mol % polymerized ethylene;
ii) an alpha-olefin-based crystalline polymer (CAOP); and
iii) a block copolymer comprising (a) a crystalline ethylene block (CEB) comprising at least 90 mol % polymerized ethylene and (b) a crystalline alpha-olefin block (CAOB);

b) maleic anhydride grafted polyethylene or maleic anhydride grafted polypropylene ; and,
c) low density polyethylene; and,

Layer C comprises a metal foil and has a top facial layer and a bottom facial surface, the top facial surface of Layer C being in adhering contact with the bottom facial surface of Layer B, and the top facial surface of Layer B being in adhering contact with the bottom facial surface of Layer A.

In some embodiments, the polypropylene in Layer A comprises polypropylene homopolymer or polypropylene copolymer. Layer A, in some embodiments, further comprises less than 50 weight percent polyethylene based on the total weight of Layer A.

In some embodiments, the metal foil comprises aluminum foil, copper foil, gold foil, or tin foil.

In some embodiments, Layer B comprises maleic anhydride grafted polyethylene. In some embodiments, the polyethylene in the maleic anhydride grafted polyethylene comprises linear low density polyethylene, low density polyethylene, or high density polyethylene. In some embodiments, the maleic anhydride grafted polyethylene has a grafted maleic anhydride level of 0.6-2.7 weight percent maleic anhydride based on the weight of the maleic anhydride grafted polyethylene. The maleic anhydride grafted polyethylene, in some embodiments, has a melt index ($I_2$) of 2-15 g/10 minutes.

In some embodiments, the low density polyethylene in Layer B has a melt index ($I_2$) of 0.45 to 10 g/10 minutes. The low density polyethylene in Layer B, in some embodiments, has a density of 0.916 to 0.930 g/cm³. In some embodiments, the low density polyethylene in Layer B has a melt strength of 2 to 30 cN.

In some embodiments, the CBC in Layer B has a melt flow rate of at least 10 g/10 minutes. The CBC in Layer B, in some embodiments, has a melt flow rate of 10 to 70 g/10 minutes.

In some embodiments, Layer B comprise 40 to 75 weight percent CBC based on the total weight of Layer B, 10 to 35 weight percent maleic anhydride grafted polyethylene based on the total weight of Layer B, and 15 to 40 weight percent low density polyethylene based on the total weight of Layer B. In some embodiments, Layer B comprise 40 to 65 weight percent CBC based on the total weight of Layer B, 15 to 35 weight percent maleic anhydride grafted polyethylene based on the total weight of Layer B, and 15 to 30 weight percent low density polyethylene based on the total weight of Layer B. In some embodiments, Layer B comprise 45 to 65 weight percent CBC based on the total weight of Layer B, 20 to 30 weight percent maleic anhydride grafted polyethylene based on the total weight of Layer B, and 15 to 25 weight percent low density polyethylene based on the total weight of Layer B.

Layer B, in some embodiments, further comprises at least one of polypropylene, polyethylene, or a polyolefin elastomer.

The thickness of Layer A, in some embodiments, is 10 to 100 microns, preferably 10 to 50 microns. In some embodiments, the thickness of Layer B is 4 to 20 microns. The thickness of Layer C, in some embodiments is 6 to 100 microns.

A multilayer structure of the present invention can comprise a combination of two or more embodiments as described herein.

Embodiments of the present invention also relate to articles formed from any of the multilayer structures of the present invention disclosed herein.

Embodiments of the present invention also relate to methods of preparing any of the multilayer structures disclosed herein. In some embodiments, a method of preparing a multilayer structure comprises coextruding Layer A and Layer B onto Layer C, wherein:

Layer A comprises polypropylene;
Layer B comprises:

a) a crystalline block copolymer composite (CBC) comprising:

i) a crystalline ethylene based polymer (CEP) comprising at least 90 mol % polymerized ethylene;
ii) an alpha-olefin-based crystalline polymer (CAOP); and
iii) a block copolymer comprising (a) a crystalline ethylene block (CEB) comprising at least 90 mol % polymerized ethylene and (b) a crystalline alpha-olefin block (CAOB);

b) maleic anhydride grafted polyethylene or maleic anhydride grafted polypropylene; and,
c) low density polyethylene; and,

Layer C comprises a metal foil,

wherein the top facial surface of Layer C is in adhering contact with the bottom facial surface of Layer B, and the top facial surface of Layer B is in adhering contact with the bottom facial surface of Layer A.

Layer A

In embodiments of the present invention, Layer A of the multilayer structure comprises polypropylene and blends of polypropylene with other polymers (e.g., polyethylene). In some embodiments, Layer A can be an outer layer of the multilayer film. In general, Layer A can comprise any polypropylene known to those of skill in the art. Additional information about polypropylene that can be used in Layer A is provided below.

The polypropylene that can be used in Layer A can be homopolymer polypropylene (hPP), random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof. Examples of homopolymer propylenes that can be used in some embodiments of the present invention include homopolymer propylenes commercially available from LyondellBasell Industries (e.g., Pro-fax PD702), from Braskem (e.g., D115A), and from Borealis (e.g., WF 420HMS).

The polypropylene that can be used in Layer A can also be a propylene-alpha-olefin interpolymer. The propylene-alpha-olefin interpolymer is characterized as having substantially isotactic propylene sequences. The propylene-alpha-olefin interpolymers include propylene-based elastomers (PBE). "Substantially isotactic propylene sequences" means that the sequences have an isotactic triad (mm) measured by 13C NMR of greater than 0.85; in the alternative, greater than 0.90; in another alternative, greater than 0.92; and in another alternative, greater than 0.93. Isotactic triads are well-known in the art and are described in, for example, USP 5,504,172 and International Publication No. WO 00/01745, which refers to the isotactic sequence in terms of a triad unit in the copolymer molecular chain determined by 13C NMR spectra.

The propylene/alpha-olefin interpolymer may have a melt flow rate in the range of from 0.1 to 500 grams per 10 minutes (g/10min), measured in accordance with ASTM D-1238 (at 230°C/2.16 Kg). All individual values and subranges from 0.1 to 500 g/10min are included herein and disclosed herein; for example, the melt flow rate can be from a lower limit of 0.1 g/lOmin, 0.2 g/lOmin, or 0.5 g/10min to an upper limit of 500 g/lOmin, 200 g/lOmin, 100 g/lOmin, or 25 g/10min. For example, the propylene/alpha-olefin copolymer may have a melt flow rate in the range of from 0.1 to 200 g/10min; or in the alternative, the propylene/ alpha-olefin copolymer may have a melt flow rate in the range of from 0.2 to 100 g/10min; or in the alternative, the propylene/alpha-olefin copolymer may have a melt flow rate in the range of from 0.2 to 50 g/10min; or in the alternative, the propylene/alpha-olefin copolymer may have a melt flow rate in the range of from 0.5 to 50 g/10min; or in the alternative, the propylene/alpha-olefin copolymer may have a melt flow rate in the range of from 1 to 50 g/10min; or in the alternative, the propylene/alpha-olefin copolymer may have a melt flow rate in the range of from 1 to 40 g/10min; or in the alternative, the propylene/alpha-olefin interpolymer may have a melt flow rate in the range of from 1 to 30 g/10min.

The propylene/alpha-olefin interpolymer has crystallinity in the range of from at least 1 percent by weight (a heat of fusion (Hf) of at least 2 Joules/gram (J/g)) to 30 percent by weight (a Hf of less than 50 J/g). All individual values and subranges from 1 percent by weight (a Hf of at least 2 J/g) to 30 percent by weight (a Hf of less than 50 J/g) are included herein and disclosed herein; for example, the crystallinity can be from a lower limit of 1 percent by weight (a Hf of at least 2 J/g), 2.5 percent (a Hf of at least 4 J/g), or 3 percent (a Hf of at least 5 J/g) to an upper limit of 30 percent by weight (a Hf of less than 50 J/g), 24 percent by weight (a Hf of less than 40 J/g), 15 percent by weight (a Hf of less than 24.8 J/g) or 7 percent by weight (a Hf of less than 11 J/g). For example, the propylene/alpha-olefin copolymer may have a crystallinity in the range of from at least 1 percent by weight (a Hf of at least 2 J/g) to 24 percent by weight (a Hf of less than 40 J/g); or in the alternative, the propylene/alpha-olefin copolymer may have a crystallinity in the range of from at least 1 percent by weight (a Hf of at least 2 J/g to 15 percent by weight (a Hf of less than 24.8 J/g); or in the alternative, the propylene/alpha-olefin copolymer may have a crystallinity in the range of from at least 1 percent by weight (a Hf of at least 2 J/g) to 7 percent by weight (a Hf of less than 11 J/g); or in the alternative, the propylene/alpha-olefin copolymer may have a crystallinity in the range of Hf of less than 8.3 J/g). The crystallinity is measured by differential scanning calorimetry (DSC) as described in USP 7,199,203. The propylene/alpha-olefin copolymer comprises units derived from propylene and polymeric units derived from one or more alpha-olefin comonomers. Exemplary comonomers utilized to manufacture the propylene/alpha-olefin copolymer are $C_2$ and $C_4$ to $C_{10}$ alpha-olefins; for example, $C_2$, $C_4$, $C_6$ and $C_8$ alpha-olefins.

The propylene/alpha-olefin interpolymer comprises from 1 to 40 percent by weight of one or more alpha-olefin comonomers. All individual values and subranges from 1 to 40 weight percent are included herein and disclosed herein; for example, the comonomer content can be from a lower limit of 1 weight percent, 3 weight percent, 4 weight percent, 5 weight percent, 7 weight percent, or 9 weight percent to an upper limit of 40 weight percent, 35 weight percent, 30 weight percent, 27 weight percent, 20 weight percent, 15 weight percent, 12 weight percent, or 9 weight percent. For example, the propylene/alpha-olefin copolymer comprises from 1 to 35 percent by weight of one or more alpha-olefin comonomers; or in the alternative, the propylene/alpha-olefin copolymer comprises from 1 to 30 percent by weight of one or more alpha-olefin comonomers; or in the alternative, the propylene/alpha-olefin copolymer comprises from 3 to 27 percent by weight of one or more alpha-olefin comonomers; or in the alternative, the propylene/alpha-olefin copolymer comprises from 3 to 20 percent by weight of one or more alpha-olefin comonomers; or in the alternative, the propylene/alpha-olefin copolymer comprises from 3 to 15 percent by weight of one or more alpha-olefin comonomers.

The propylene/alpha-olefin interpolymer has a density of typically less than 0.895 g/cm³; or in the alternative, less than 0.890 g/cm³; or in the alternative, less than 0.880 g/cm³; or in the alternative, less than 0.870 g/cm³. The propylene/alpha-olefin interpolymer has a density of typically greater than 0.855 g/cm³; or in the alternative, greater than 0.860 g/cm³; or in the alternative, greater than 0.865 g/cm³.

The propylene/alpha-olefin interpolymer has a melting temperature (Tm) typically of less than 120°C; or in the alternative, < 100°C; or in the alternative, < 90°C; or in the alternative, < 80°C; or in the alternative, < 70°C; and a heat of fusion (Hf) typically of less than 70 Joules per gram (J/g) as measured by differential scanning calorimetry (DSC) as described in USP 7,199,203.

The propylene/alpha-olefin interpolymer has a molecular weight distribution (MWD), defined as weight average molecular weight divided by number average molecular weight ($M_w/M_n$) of 3.5 or less; or 3.0 or less; or from 1.8 to 3.0.

Such propylene/alpha-olefin interpolymers are further described in USP 6,960,635 and 6,525,157. Such propylene/alpha-olefin interpolymers are commercially available from The Dow Chemical Company, under the trade name VERSIFY™, or from ExxonMobil Chemical Company, under the trade name VISTAMAXX.

The polypropylene that can be used in Layer A can also be EPDM materials. EPDM materials are linear interpolymers of ethylene, propylene, and a nonconjugated diene such as 1,4-hexadiene, dicyclopentadiene, or ethylidene norbornene. A preferred class of interpolymers having the properties disclosed herein is obtained from polymerization of ethylene, propylene, and a non-conjugated diene to make an EPDM elastomer. Suitable non-conjugated diene monomers can be a straight chain, branched chain or cyclic hydrocarbon diene having from 6 to 15 carbon atoms.

Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). The especially preferred dienes are 5-ethylidene-2-norbornene (ENB) and 1,4-hexadiene (HD).

In some embodiments, the EPDM polymers have an ethylene content of from 50% to 75% by weight, a propylene content of from 20% to 49% by weight, and a nonconjugated diene content from 1% to 10% by weight, all weights based upon the total weight of the polymer. Examples of representative EPDM polymers for use include Nordel IP 4770R, Nordel 3722 IP available from The Dow Chemical Company, Midland, MI, Vistalon 3666 available from ExxonMobil, Baton Rouge, LA, and Keltan 5636A available from DSM Elastomers Americas, Addis, LA.

The EPDM polymers, also known as elastomeric copolymers of ethylene, a higher-alpha-olefin and a polyene, have molecular weights from 20,000 to 2,000,000 daltons or more. Their physical form varies from waxy materials to rubbers to hard plastic-like polymers. They have dilute solution viscosities (DSV) from 0.5 to 10 dl/g, measured at 30°C on a solution of 0.1 gram of polymer in 100 cc of toluene. The EPDM polymers also have a Mooney viscosity of greater than 50 ML(1+4) at 125 °C; and, a density of 0.870 g/cc to 0.885 g/cc or from 0.875 g/cc to 0.885 g/cc.

In some embodiments, in addition to polypropylene as described above, Layer A can further comprise polyethylene. In general, in such embodiments, Layer A can comprise any polyethylene known to those of skill in the art. For example, the polyethylene optionally used in Layer A can be selected from ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), and combinations thereof. In some embodiments where Layer A comprises polypropylene and polyethylene, Layer A comprises less than 50 weight percent polyethylene based on the total weight of Layer A, or in the alternative, less than 40 weight percent polyethylene, or in the alternative, less than 30 weight percent, or in the alternative, less than 20 weight percent, or in the alternative, less than 10 weight percent.

The thickness of Layer A can vary depending on a number of factors including, for example, whether Layer A is an outer layer of the multilayer structure, the composition of Layer B or any other layer adjacent to Layer A, the desired overall thickness of the multilayer structure, the intended use of the multilayer structure, and other factors. The thickness of Layer A, in some embodiments, is 10 to 100 microns. All individual values and subranges from 10 to 100 microns are included and disclosed herein; for example, the metal foil layer thickness can range from a lower limit of 10, 20, 30, 40, 50, 60, 70, 80, 90, or 95 microns to an upper limit of 15, 20, 30, 40, 50, 60, 70, 80, 90, or 100 microns. In some embodiments, the thickness of Layer A is 10 to 50 microns.

Metal Foil (Layer C)

The tie layers used in multilayer structures of the present invention are particularly useful in adhering Layer A to metal foils. Any metal foil may form the substrate onto which the Layers A and B are applied. Exemplary metal foils include aluminum foil, copper foil, gold foil, and tin foil. The metal foil may, but need not, be flame or corona treated or subjected to other treatment so as to improve wettability and/or adhesion

In embodiments wherein the multilayer structure includes a metal foil layer (e.g., an aluminum foil layer), the metal foil has a thickness from 6 to 100 microns. All individual values and subranges from 6 to 100 microns are included and disclosed herein; for example, the metal foil layer thickness can range from a lower limit of 6, 10, 20, 30, 40, 50, 60, 70, 80, 90, or 95 microns to an upper limit of 10, 15, 20, 30, 40, 50, 60, 70, 80, 90, or 100 microns. To one skilled in the art the thickness of the metal foil layer can be selected so as to be sufficient for a particular application.

Tie Layer (Layer B)

The composition of Layer B in the films according to the present invention, often referred to as a "tie" layer, is selected to be adhered by coextrusion to Layer A and to be extrusion coated on Layer C (the metal foil layer) in the production of multilayer films of the present invention. That is, the composition of Layer B is selected so as to adhere by coextrusion to a layer comprising polypropylene (Layer A), and so as to facilitate the extrusion coating of Layers A/B to a metal foil layer (Layer C). In such embodiments, a bottom surface of Layer A is in adhering contact with a top surface of Layer B, and a bottom surface of Layer B is in adhering contact with a top surface of Layer C.

For adhesion to both a polypropylene-containing layer (Layer A) and a metal foil layer (Layer C), it has been found that the combination of a crystalline block copolymer composite (CBC, as further described below), maleic anhydride grafted polyethylene or maleic anhydride grafted polypropylene, and low density polyethylene provides a tie layer (Layer B) having desirable properties.

One of the components in Layer B is a maleic anhydride grafted polyethylene (MAH-g-PE) and/or a maleic anhydride grafted polypropylene (MAH-g-PP). With regard to MAH-g-PE, the grafted polyethylene may be any number of polyethylenes including, for example, ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), and combinations thereof. In some embodiments, the grafted polyethylene comprises linear low density polyethylene, low density polyethylene, or high density polyethylene. The amount of maleic anhydride constituent grafted onto the polyethylene chain is greater than 0.05 weight percent to 3 weight percent (based on the weight of the olefin interpolymer), as determined by titration analysis, FTIR analysis, or any other appropriate method. More preferably, this amount is 0.6 to 2.7 weight percent based on the weight of the olefin interpolymer. In some embodiments, the amount of maleic anhydride grafted constituents is 1.0 to 2.0 weight percent based on the weight of the olefin interpolymer. The amount of maleic anhydride grafted constituents is 1.0 to 1.6 weight percent, in some embodiments, based on the weight of the olefin interpolymer.

In some embodiments, the MAH-g-PE has a melt index ($I_2$) of 0.2 g/10 minutes to 15 g/10 minutes. All individual values and subranges between 0.2 and 15 g/10 minutes are included herein and disclosed herein. For example, the MAH-g-PE can have a melt index from a lower limit of 0.2, 1, 2, 3, 4, 5, 6, 7, 8, 9, 10, or 11 g/10 minutes to an upper limit of 5, 6, 7, 8, 9, 10, 11, 12, 13, 14, or 15 g/10 minutes. The MAH-g-PE has a melt index ($I_2$) of 2 to 15 g/10 minutes in some embodiments. The MAH-g-PE has a melt index ($I_2$) of 5 to 15 g/10 minutes in some embodiments. In some embodiments, the MAH-g-PE has a melt index ($I_2$) of 7 to 15 g/10 minutes.

The graft process for MAH-g-PE can be initiated by decomposing initiators to form free radicals, including azo-containing compounds, carboxylic peroxyacids and peroxyesters, alkyl hydroperoxides, and dialkyl and diacyl peroxides, among others. Many of these compounds and their properties have been described (Reference: J. Branderup, E. Immergut, E. Grulke, eds. "Polymer Handbook," 4th ed., Wiley, New York, 1999, Section II, pp. 1-76.). It is preferable for the species that is formed by the decomposition of the initiator to be an oxygen-based free radical. It is more preferable for the initiator to be selected from carboxylic peroxyesters, peroxyketals, dialkyl peroxides, and diacyl peroxides. Some of the more preferable initiators, commonly used to modify the structure of polymers, are listed in US Patent No. 7,897,689, in the table spanning Col. 48 line 13 - Col. 49 line 29. Alternatively, the grafting process for MAH-g-PE can be initiated by free radicals generated by thermal oxidative process.

Optionally, a MAH-g-PP concentrate may be used. The grafted polypropylene may be any of the polypropylenes as described for Layer A. The amount of maleic anhydride constituent grafted onto the polypropylene chain is greater than 0.05 weight percent to 2.0 weight percent (based on the weight of the olefin interpolymer), as determined by titration analysis, FTIR analysis, or any other appropriate method. More preferably, this amount is greater than 0.25 weight percent to 2.0 weight percent, and in yet a further embodiment, this amount is greater than 0.3 weight percent to 2.0 weight percent. In a preferred embodiment, 0.5 weight percent to 2.0 weight percent of maleic anhydride is grafted.

Optionally, MAH-g-PE can be replaced or combined with a variety of grafted polyolefins that comprising radically graftable species. These species include unsaturated molecules, each containing at least one heteroatom. These species include, but are not limited to, maleic anhydride, dibutyl maleate, dicyclohexyl maleate, diisobutyl maleate, dioctadecyl maleate, N-phenylmaleimide, citraconic anhydride, tetrahydrophthalic anhydride, bromomaleic anhydride, chloromaleic anhydride, nadic anhydride, methylnadic anhydride, alkenylsuccinic anhydride, maleic acid, fumaric acid, diethyl fumarate, itaconic acid, citraconic acid, crotonic acid, and the respective esters, imides, salts, and Diels-Alder adducts of these compounds.

Examples of MAH-g-PE that can be used in Layer B include those commercially available from The Dow Chemical Company under the trade name AMPLIFY™ such as AMPLIFY™ GR 204.

In addition to CBC and MAH-g-PE and/or MAH-g-PP, Layer B further comprises low density polyethylene (LDPE). A variety of LDPEs can be used in Layer B. Suitable low density polyethylene can be produced in either a stirred autoclave or a tubular reactor.

The low density polyethylene has a density of 0.916 g/cm$^3$ to 0.940 g/cm$^3$, in some embodiments. All individual values and subranges from 0.916 to 0.930 g/cm$^3$ are included herein and disclosed herein; for example, the density of the polyethylene can be from a lower limit of 0.916, 0.918, 0.920, 0.922, or 0.925 g/cm$^3$ to an upper limit of 0.920, 0.922, 0.924, 0.926, 0.928, or 0.930 g/cm$^3$.

The LDPE can have a melt index ($I_2$) of 0.45 to 10 g/10 minutes, in some embodiments. All individual values and subranges from 0.4 to 10 g/10 minutes are included herein and disclosed herein. For example, the LDPE can have a melt index from a lower limit of 0.45, 0.5, 0.75, 1.0, 1.2, 1.4, 1.5, 2.0, 2.5, 3.0, 3.5, 4.0, 4.5, or 5.0 g/10 minutes to an upper limit of 5.0, 5.5, 6.0, 6.5, 7.0, 7.5, 8.0, 8.5, 9.0, 9.5, or 10 g/10 minutes. For example, the LDPE can have a melt index of 0.45 to 8 g/10 minutes, or 1.2 to 10 g/10 minutes, or 1.5 to 8 g/10 minutes.

The melt strength of the LDPE can be important in some embodiments. The LDPE can have a melt strength of 2 to 30 cN, in some embodiments. All individual values and subranges from 2 to 30 cN are included herein and disclosed herein. For example, the LDPE can have a melt strength from a lower limit of 2.0, 2.5, 3.0, 3.5, 4.0, 4.5, 5.0, 5.5, 6.0, 6.5, or 7.0 cN to an upper limit of 3.0, 3.5, 4.0, 4.5, 5.0, 5.5, 6.0, 6.5, 7.0, 7.5, 8.0, 8.5, 9.0, 9.5, 10, 11, 12, 13, 14, 15, 20, 25, or 30 cN.

Examples of LDPEs that can be used in Layer B include those commercially available from The Dow Chemical Company such as DOW™ LDPE 621i, DOW™ LDPE 722, DOW™ LDPE 662i, DOW™ LDPE 50041, DOW™ LDPE 770G, DOW™ LDPE PT 7007, DOW™ LDPE PG 7008, DOW™ LDPE PG 7008LG, DOW™ LDPE PG 7004, DOW™ LDPE 7010E, DOW™ LDPE 7010A, AGILITY™ EC 7100, AGILITY™ EC 7000 and others.

In addition to LDPE and MAH-g-PE and/or MAH-g-PP, Layer B further comprises a crystalline block copolymer composite. The crystalline block copolymer composite (CBC) comprises i) a crystalline ethylene based polymer (CEP) comprising at least 90 mol % polymerized ethylene, ii) an alpha-olefin-based crystalline polymer (CAOP), and iii) a block copolymer comprising (a) a crystalline ethylene block (CEB) comprising at least 90 mol % polymerized ethylene and (b) a crystalline alpha-olefin block (CAOB).

The term "crystalline block composite" (CBC) refers to polymers having three components: a crystalline ethylene based polymer (CEP) (also referred to herein as a soft polymer), a crystalline alpha-olefin based polymer (CAOP) (also referred to herein as a hard polymer), and a block copolymer comprising a crystalline ethylene block (CEB) and a crystalline alpha-olefin block (CAOB), wherein the CEB of the block copolymer is the same composition as the CEP in the block composite and the CAOB of the block copolymer is the same composition as the CAOP of the block composite. Additionally, the compositional split between the amount of CEP and CAOP will be essentially the same as that between the corresponding blocks in the block copolymer. When produced in a continuous process, the crystalline block composites desirably have a polydispersity index (PDI) from 1.7 to 15, specifically 1.8 to 10, specifically from 1.8 to 5, more specifically from 1.8 to 3.5. Such crystalline block composites are described in, for example, US Patent Application Publication Nos. 2011/0313106, 2011/0313107 and 2011/0313108, all published on December 22, 2011, and in PCT Publication No. WO2014/043522A1, published March 20, 2014.

The crystalline ethylene based polymer (CEP) comprises polymerized ethylene units in which any comonomer content is 10 mol% or less, specifically between 0 mol% and 10 mol%, more specifically between 0 mol% and 7 mol% and most specifically between 0 mol% and 5 mol%. The crystalline ethylene based polymer has corresponding melting points that are specifically 75°C and above, specifically 90°C and above, and more specifically 100°C and above.

The crystalline alpha-olefin based polymer (CAOP) comprises polymerized alpha olefin units in which the monomer is present in an amount greater than 90 mol percent, specifically greater than 93 mol percent, more specifically greater than 95 mol percent, and specifically greater than 98 mol percent, based on the total weight of the crystalline alpha-olefin based polymer. In an exemplary embodiment, the polymerized alpha olefin unit is polypropylene. The comonomer content in the CAOPs is less than 10 mol percent, and specifically less than 7 mol percent, and more specifically less than 5 mol percent, and most specifically less than 2 mol%. CAOPs with propylene crystallinity have corresponding melting points that are 80°C and above, specifically 100°C and above, more specifically 115°C and above, and most specifically 120°C and above. In some embodiments, the CAOP comprise all or substantially all propylene units.

Examples of other alpha-olefin units (in addition to the propylene) that may be used in the CAOP contain 4 to 10 carbon atoms. Examples of these are 1-butene, 1-hexene, 4-methyl-1-pentene and 1-octene are the most preferred. Preferred diolefins are isoprene, butadiene, 1,4-pentadiene, 1,4-hexadiene, 1,5-hexadiene, 1,7-octadiene, 1, 9-decadiene, dicyclopentadiene, methylene-norbornene, 5-ethylidene-2-norbornene, or a combination comprising at least one of the foregoing alpha-olefin units.

The block copolymer of the crystalline block composite comprises an ethylene block (e.g., a crystalline ethylene block (CEB)) and a crystalline alpha olefin block (CAOB). In the crystalline ethylene block (CEB), ethylene monomer is present in an amount greater than 90 mol%, specifically greater than 93 mol percent, more specifically greater than 95 mol percent, and specifically greater than 98 mol percent, based on the total weight of the CEB. In an exemplary embodiment, the crystalline ethylene block (CEB) polymer is polyethylene. The polyethylene is present in an amount greater than 90 mol%, specifically greater than 93 mol percent, and more specifically greater than 95 mol percent, based on the total weight of the CEB. If any comonomer is present in in the CEB it is present in an amount of less than 10 mole%, specifically less than 5 mole%, based on the total number of moles of the CEB.

The CAOB comprises a polypropylene block that is copolymerized with other alpha-olefin units that contain 2 or 4 to 10 carbon atoms. Examples of the other alpha-olefin units are provided above. The polypropylene is present in the CAOB in an amount of greater than or equal to 90 mole%, specifically greater than 93 mole%, and more specifically greater than 95 mole%, based on the total number of moles of the CAOB. The comonomer content in the CAOBs is less than 10 mol percent, and specifically less than 7 mol percent, and more specifically less than 5 mol percent, based on the total number of moles in the CAOB. CAOBs with propylene crystallinity have corresponding melting points that are 80°C and above, specifically 100°C and above, more specifically 115°C and above, and most specifically 120°C and above. In some embodiments, the CAOB comprise all or substantially all propylene units.

In one embodiment, the crystalline block composite polymers comprise propylene, 1-butene or 4-methyl-1-pentene and one or more comonomers. Specifically, the block composites comprise in polymerized form propylene and ethylene and/or one or more $C_{4-20}$ α-olefin comonomers, and/or one or more additional copolymerizable comonomers or they comprise 4-methyl-1-pentene and ethylene and/or one or more $C_{4-20}$ α-olefin comonomers, or they comprise 1-butene and ethylene, propylene and/or one or more $C_5$-$C_{20}$ α-olefin comonomers and/or one or more additional copolymerizable comonomers. Additional suitable comonomers are selected from diolefins, cyclic olefins, and cyclic diolefins, halogenated vinyl compounds, and vinylidene aromatic compounds. Preferably, the monomer is propylene and the comonomer is ethylene.

Comonomer content in the crystalline block composite polymers may be measured using any suitable technique, with techniques based on nuclear magnetic resonance (NMR) spectroscopy preferred.

The crystalline block composites have a melting point Tm greater than 100°C specifically greater than 120°C, and more specifically greater than 125°C. In an embodiment, the Tm is in the range of from 100°C to 250°C, more specifically from 120°C to 220°C and also specifically in the range of from 125°C to 220°C. Specifically the melt flow rate (MFR), when measured at 230° C and 2.16 kg, of the block composites and crystalline block composites is from 0.1 to 1000 g/10 minutes, more specifically from 0.1 to 70 g/10 minutes and more specifically from 10 to 70 g/minutes. In some embodiments, the MFR of the block composites and CBC, when measured at 230° C and 2.16 kg, is at least 10 g/10 minutes.

In an embodiment, the crystalline block composites have a weight average molecular weight (Mw) from 10,000 to about 2,500,000 grams per mole (g/mole), specifically from 35000 to about 1,000,000 and more specifically from 50,000 to about 300,000, specifically from 50,000 to about 200,000 g/mole. The sum of the weight percents of soft copolymer, hard polymer and block copolymer equals 100%.

In an embodiment, the crystalline block composite polymers of the invention comprise from 0.5 to 95 wt % CEP, from 0.5 to 95 wt % CAOP and from 5 to 99 wt % block copolymer. More preferably, the crystalline block composite polymers comprise from 0.5 to 79 wt % CEP, from 0.5 to 79 wt % CAOP and from 20 to 99 wt % block copolymer and more preferably from 0.5 to 49 wt % CEP, from 0.5 to 49 wt % CAOP and from 50 to 99 wt % block copolymer. Weight percents are based on total weight of crystalline block composite. The sum of the weight percents of CEP, CAOP and block copolymer equals 100%.

Preferably, the block copolymers comprise from 5 to 95 weight percent crystalline ethylene blocks (CEB) and 95 to 5 wt percent crystalline alpha-olefin blocks (CAOB). They may comprise 10 wt% to 90 wt% CEB and 90 wt % to 10 wt% CAOB. More preferably, the block copolymers comprise 25 to 75 wt% CEB and 75 to 25 wt% CAOB, and even more preferably they comprise 30 to 70 wt % CEB and 70 to 30 wt % CAOB.

In some embodiments, the crystalline block composites have a Crystalline Block Composite Index (CBCI) that is greater than zero but less than about 0.4 or from 0.1 to 0.3. In other embodiments, CBCI is greater than 0.4 and up to 1.0. In some embodiments, the CBCI is 0.1 to 0.9, from about 0.1 to about 0.8, from about 0.1 to about 0.7 or from about 0.1 to about 0.6. Additionally, the CBCI can be in the range of from about 0.4 to about 0.7, from about 0.5 to about 0.7, or from about 0.6 to about 0.9. In some embodiments, CBCI is in the range of from about 0.3 to about 0.9, from about 0.3 to about 0.8, or from about 0.3 to about 0.7, from about 0.3 to about 0.6, from about 0.3 to about 0.5, or from about 0.3 to about 0.4. In other embodiments, CBCI is in the range of from about 0.4 to about 1.0, from about 0.5 to about 1.0, or from about 0.6 to about 1.0, from about 0.7 to about 1.0, from about 0.8 to about 1.0, or from about 0.9 to about 1.0.

Information regarding the method of making crystalline block composites for use in some embodiments of the present invention is provided in Example 1 below.

The components of Layer B may be present in the following amounts based on the total polymer weight of Layer B: 40 wt% to 75 wt%, 40 to 65 wt%, or 45 to 65 wt% CBC; 10 to 35 wt%, or 15 to 35 wt%, or 20 to 30 wt% MAH-g-PE; and 15 to 40 wt%, or 15 to 30 wt%, or 15 to 25 wt% LDPE. The grafted MAH concentration in Layer B can range from 0.6 to 2.7%, in some embodiments. Optionally, MAH-g-PE can be substituted by MAH-g-PP or a combination of MAH-g-PE and MAH-g-PP.

In addition to CBC, LDPE, and MAH-g-PE and/or MAH-g-PP, Layer B, in some embodiments can further comprise at least one of polypropylene, polyethylene, a polyolefin plastomer, or a polyolefin elastomer. The polypropylene can include any of those disclosed herein in connection with Layer A. The polyethylene can generally include any of those disclosed herein. Examples of polyolefin plastomers or elastomers include any polyethylene or polypropylene based elastomer including, for example, homogeneously branched ethylene/alpha-olefin copolymer, propylene/alpha-olefin interpolymer, and ethylene-propylene-diene monomer rubber (EPDM). More specific examples of homogeneously branched ethylene/alpha-olefin interpolymers that can be used in some embodiments of the present invention include homogeneously branched, linear ethylene/α-olefin copolymers (e.g. Tafmer olefin copolymers from Mitsui Petrochemicals Company Limited and Exact olefin copolymers from ExxonMobil), and homogeneously branched, substantially linear ethylene/α-olefin polymers (e.g., AFFINITY™ and ENGAGE™ polyethylenes available from The Dow Chemical Company). The substantially linear ethylene copolymers are especially preferred, and are more fully described in USP 5,272,236, 5,278,272 and 5,986,028. Blends of any of these interpolymers can also be used in the practice of this invention. Examples also include propylene based copolymers with ethylene (e.g., VERSIFY plastomers and elastomers which are commercially available from The Dow Chemical Company, and Vistamaxx propylene-based elastomers from ExxonMobil).

The thickness of Layer B can vary depending on a number of factors including, for example, the composition of Layer B or any other layer adjacent to Layer B, the desired overall thickness of the multilayer structure, the intended use of the multilayer structure, and other factors. The thickness of Layer B, in some embodiments, is 4 to 40 microns. In some embodiments, the thickness of Layer B is 4 to 20 microns. All individual values and subranges from 4 to 20 microns are included and disclosed herein; for example, the metal foil layer thickness can range from a lower limit of 4, 6, 8, 10, 12, 14, 16, or 18 microns to an upper limit of 6, 8, 10, 12, 14, 16, 18, or 20 microns.

Other Layers

Some embodiments of multilayer films of the present invention can include layers beyond those described above. For example, Layer A can be a peelable sealant layer or an additional layer (Layer D) can be provided between Layers B and C to provide a re-close functionality. As another example, an additional layer (Layer D) can provide the option of adding a polypropylene or polyethylene layer to the multilayer structure to, for example, increase the tear resistance or impact and puncture resistance of the multilayer structure. As another example, while not necessarily in adhering contact with the tie layer (Layer B), a multilayer structure can further comprise other layers typically included in multilayer structures depending on the application including, for example, barrier layers, sealant layers, tie layers, polyethylene layers, other polypropylene layers. Additionally, other layers such as printed, high modulus, high gloss layers may be laminated to multilayer structures of the present invention.

Additives

It should be understood that any of the foregoing layers can further comprise one or more additives as known to those of skill in the art such as, for example, antioxidants, ultraviolet light stabilizers, thermal stabilizers, slip agents, antiblock, pigments or colorants, processing aids, crosslinking catalysts, flame retardants, fillers and foaming agents.

Methods of Preparing Multilayer Structures

Multilayer structures of the present invention can be prepared by coextruding Layer A and Layer B onto Layer C. For example, a multilayer structure comprising Layers A and B can be directly co-extrusion coated onto the metal foil layer (Layer C) in an extrusion coating process in which the metal foil can be preheated. Adhesion of Layer B (the tie layer) onto Layer C (the metal foil layer) can be improved by tempering of the metal foil at a temperature of 60° C - 120° C.

Multilayer Structures

Multilayer structures comprising the combinations of layers disclosed herein can have a variety of thicknesses depending, for example, on the number of layers, the intended use of the film, and other factors. In some embodiments, multilayer films of the present invention have a thickness of 10 microns to 500 microns. Multilayer structures of the present invention, in various embodiments, can have a thickness of 10 to 300 microns, or 15 to 220 microns, or 20 to 170 microns.

Packages

In some embodiments, the present invention relates to a package comprising the multilayer structure of any embodiment disclosed herein. In a particular embodiment, the package is a retort package. The package may be used to contain, in various embodiments, solids, slurries, liquids, or gasses. By way of example and not limitation, the package may be used to contain acidic solutions, corn oil, alcohols, meats, cheeses, sun screen, shampoo, spice, soy sauce, creamer, flavored coffee, milk, juice, detergent, aseptic food, hot fill juice, fatty food, baby wipe, iodine solution, salad dressing, ketchup, sauces, milk powder, and other items.

Some embodiments of the invention will now be described in detail in the following Examples.

**Examples**

*Test Methods*

<u>Density</u> is measured in accordance with ASTM D-792. The result is reported in grams (g) per cubic centimeter, or g/cc.

<u>Melt index</u>: Melt indices $I_2$ (or $I_2$) and $I_{10}$ (or $I_{10}$) are measured in accordance with ASTM D-1238 at 190° C and at 2.16 kg and 10 kg load, respectively. Their values are reported in g/10 min.

<u>Melt flow rate (MFR)</u>, as related to Table 4, is measured in accordance with ASTM D-1238 (230°C; 2.16 kg). Melt flow rate (MFR), as related to Table 5, is measured in accordance with ISO 1133. The results are reported in grams/10 minutes.

<u>Differential Scanning Calorimetry (DSC)</u> is used to measure crystallinity in the polymers. About 5 to 8 mg of polymer sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for polypropylene or "PP"). The sample is kept at this temperature for three minutes. Then the sample is cooled at a rate of 10°C/min to -60°C for PE (-40°C for PP), and kept isothermally at that temperature for three minutes. The sample is next heated at a rate of 10°C/min, until complete melting (second heat). The percent crystallinity is calculated by dividing the heat of fusion ($H_f$), determined from the second heat curve, by a theoretical heat of fusion of 292 J/g for PE (165 J/g, for PP), and multiplying this quantity by 100 (for example, % cryst. = ($H_f$/292 J/g) x 100 (for PE)).

Unless otherwise stated, melting point(s) ($T_m$) of each polymer is determined from the second heat curve (peak Tm), and the crystallization temperature ($T_c$) is determined from the first cooling curve (peak Tc). With respect to DSC, the temperature at the maximum heat flow rate with respect to a linear baseline is used as the melting point. The linear baseline is constructed from the beginning of the melting (above the glass transition temperature) and to the end of the melting point.

<u>High Temperature Liquid Chromatography</u>: High Temperature Liquid Chromatography Experimental Method Instrumentation is the HTLC experiment, which is done according to the published method with minor modifications (Lee, D.; Miller, M. D.; Meunier, D. M.; Lyons, J. W.; Bonner, J. M.; Pell, R. J.; Shan, C. L. P.; Huang, T. J. Chromatogr. A 2011, 1218, 7173). Two Shimadzu (Columbia, MD, USA) LC-20AD pumps are used to deliver decane and trichlorobenzene (TCB) respectively. Each pump is connected to a 10:1 fixed flow splitter (Part #: 620-PO20-HS, Analytical Scientific Instruments Inc., CA, USA). The splitter has a pressure drop of 1500 psi at 0.1 mL/min in $H_2O$ according to the manufacturer. The flow rates of both pumps are set at 0.115 mL/min. After the splitting, the minor flow is 0.01 mL/min for both decane and TCB, determined by weighing the collected solvents for more than 30min. The volume of the collected eluent is determined by the mass and the densities of the solvents at room temperature. The minor flow is delivered to the HTLC column for separation. The main flow is sent back to the solvent reservoir. A 50-μL mixer (Shimadzu) is connected after the splitters to mix the solvents from Shimadzu pumps. The mixed solvents are then delivered to the injector in the oven of Waters (Milford, MA, USA) GPCV2000. A Hypercarb™ column (2.1 × 100 mm, 5 μm particle size) is connected between the injector and a 10-port VICI valve (Houston, TX, USA). The valve is equipped with two 60-μL sample loops. The valve is used to continuously sample eluent from the first dimension (D1) HTLC column to the second dimension (D2) SEC column. The pump of Waters GPCV2000 and a PLgel Rapid™-M column (10 × 100 mm, 5 μm particle size) are connected to the VICI valve for D2 size exclusion chromatography (SEC). The symmetric configuration is used for the connections as described in the literature (Brun, Y.; Foster, P. J. Sep. Sci. 2010, 33, 3501). A dual-angle light scattering detector (PD2040, Agilent, Santa Clara, CA, USA) and an IR5 inferred absorbance detector are connected after the SEC column for measurement of concentration, composition, and molecular weight.

*Separation for HTLC*: Approximately 30 mg are dissolved in 8-mL decane by gently shaking the vial at 160 °C for 2 hours. The decane contains 400 ppm BHT(2,6-Di-tert-butyl-4-methylphenol) as the radical scavenger. The sample vial is then transferred to the autosampler of GPCV2000 for injection. The temperatures of the autosampler, the injector, both the Hypercarb and the PLgel columns, the 10-port VICI valve, and both the LS and IR5 detectors are maintained at 140 °C throughout the separation.

The initial conditions before injection are as follows. The flow rate for the HTLC column is 0.01 mL/min. The solvent composition in the D1 Hypercarb column is 100% decane. The flow rate for the SEC column is 2.51 mL/min at room temperature. The solvent composition in the D2 PLgel column is 100% TCB. The solvent composition in the D2 SEC column does not change throughout the separation.

A 311-μL aliquot of sample solution is injected into the HTLC column. The injection triggers the gradient described below:

From 0 - 10 min, 100% decane/ 0% TCB;
From 10 - 651 min, TCB is increased linearly from 0% TCB to 80% TCB.

The injection also triggers the collection of the light scattering signal at 15° angle (LS15) and the "measure" and "methyl" signals from IR5 detector ($IR_{measure}$ and $IR_{methyl}$) using EZChrom™ chromatography data system (Agilent). The analog signals from detectors are converted to digital signals through a SS420X analog-to-digital converter. The collection frequency is 10 Hz. The injection also triggers the switch of the 10-port VICI valve. The switch of the valve is controlled by the relay signals from the SS420X converter. The valve is switched every 3 min. The chromatograms are collected from 0 to 651 min. Each chromatogram consist of 651/3 = 217 SEC chromatograms.

After the gradient separation, 0.2 mL of TCB and 0.3 mL of decane are used to clean and re-equilibrate the HTLC column for next separation. The flow rate of this step is 0.2 mL/min, delivered by a Shimadzu LC-20 AB pump connected to the mixer.

*Data Analysis for HTLC:* The 651 min raw chromatogram is first unfolded to give 217 SEC chromatograms. Each chromatogram is from 0 to 7.53 mL in the unit of 2D elution volume. The integration limit is then set and the SEC chromatograms undergo spike removal, baseline correction, and smoothing. The process is similar to batch analysis of multiple SEC chromatograms in conventional SEC. The sum of all the SEC chromatograms is inspected to ensure both left side (upper integration limit) and right side (lower integration limit) of the peak were at the baseline as zero. Otherwise, the integration limit is adjusted to repeat the process.

Each SEC chromatogram n from 1 to 217 yields an X-Y pair in the HTLC chromatogram, where n is the fraction number:

$$X_n = \text{elution volume (mL)} = D1 \text{ flow rate} \times n \times t_{switch}$$

where $t_{switch}$ = 3min is the switch time of the 10-port VICI valve.

$$Y_n = \text{signal intensity (Voltage)} = \sum_{peak\ start}^{peak\ end} IR_{measure,n}$$

The above equation uses $IR_{measure}$ signal as the example. The obtained HTLC chromatogram shows the concentrations of the separated polymeric components as a function of elution volume. The normalized $IR_{measure}$ HTLC chromatogram is shown in Figure 9 with Y represented by dW/dV, meaning the normalized weight fractions with respect to the elution volume.

X-Y pairs of data are also obtained from $IR_{methyl}$ and LS15 signals. The ratio of $IR_{methyl}/IR_{measure}$ is used to calculate composition after calibration. The ratio of LS $15/IR_{measure}$ is used to calculate weight-average molecular weight (*M*w) after calibration.

Calibration follows the procedures of Lee et al., *ibid.* High density polyethylene (HDPE), *isotactic* polypropylene (iPP), and ethylene-propylene copolymer with propylene contents of 20.0, 28.0, 50.0, 86.6, 92.0, and 95.8 wt% P are used as the standards for $IR_{methyl}/IR_{measure}$ calibration. The composition of the standards are determined by NMR. The standards are run by SEC with IR5 detector. The obtained $IR_{methyl}/IR_{measure}$ ratios of the standards are plotted as a function of their compositions, yielding the calibration curve.

The HDPE reference is used for routine LS15 calibration. The $M_w$ of the reference is predetermined by GPC as 104.2 kg/mol with LS and RI (refractive index) detectors. GPC uses NBS 1475 as the standard in GPC. The standard has a certified value of 52.0 kg/mol by NIST. Between 7 to 10 mg of the standard is dissolved in 8-mL decane at 160 °C. The solution is injected to the HTLC column in 100% TCB. The polymer is eluted under constant 100% TCB at 0.01 mL/min. Therefore, the peak of the polymer appears at the HTLC column void volume. A calibration constant, Ω, is determined from the total LS15 signals ($A_{LS15}$) and the total $IR_{measure}$ signals ($A_{IR,measure}$):

$$\Omega = \frac{A_{LS15}}{A_{IR,measure}M_w}$$

The experimental LS15/*IR*measure ratio is then converted to *M*w through Ω.

C$^{13}$ Nuclear Magnetic Resonance (NMR) involves the following:

Sample Preparation: samples are prepared by adding approximately 2.7g of a 50/50 mixture of tetrachloroethane-d2/orthodichlorobenzene that is 0.025M in chromium acetylacetonate (relaxation agent) to 0.21g sample in a 10mm NMR tube. The samples are dissolved and homogenized by heating the tube and its contents to 150°C.

Data Acquisition Parameters: data is collected using a Bruker 400 MHz spectrometer equipped with a Bruker Dual DUL high-temperature CryoProbe. The data is acquired using 320 transients per data file, a 7.3 sec pulse repetition delay (6 sec delay + 1.3 sec acq. time), 90 degree flip angles, and inverse gated decoupling with a sample temperature of 125°C. All measurements are made on non-spinning samples in locked mode. Samples are homogenized immediately prior to insertion into the heated (130°C) NMR Sample changer, and are allowed to thermally equilibrate in the probe for 15 minutes prior to data acquisition. The NMR may be used to determine total weight percent of ethylene, e.g., with respect to the block composite index discussed below.

Molecular Weight Distribution (MWD) is measured via Gel Permeation Chromatography (GPC). A GPC system consists of either a Polymer Laboratories Model PL-210 or a Polymer Laboratories Model PL-220 instrument. The column and carousel compartments are operated at 140°C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci.. Polym. Let., 6, 621 (1968)): $M_{polypropylene} = 0.645(M_{polystyrene})$.

Dynamic mechanical spectrum (DMS) of the samples is measured on an ARES II rheometer (TA Instruments). The rheometer is equipped with 25 mm diameter parallel plates, the strain is set at 5 % (which is in the linear-viscoelastic range of the blends), and the frequency is varied from 100 rad/s to 0.1 rad/s at 190 °C.

Melt Strength: The melt strength of LDPE and other samples is measured according to the following procedure. Melt strength measurements are conducted on a Göttfert Rheotens 71.97 (Göttfert Inc.; Rock Hill, SC) attached to a Göttfert Rheotester 2000 capillary rheometer. The polymer melt is extruded through a capillary die with a flat entrance angle (180 degrees), with a capillary diameter of 2.0 mm, and an aspect ratio (capillary length/capillary diameter) of 15. After equilibrating the samples at 190° C for 10 minutes, the piston is run at a constant piston speed of 0.265 mm/second. The standard test temperature is 190° C. The sample is drawn uniaxially to a set of accelerating nips, located 100 mm below the die, with an acceleration of 2.4 mm/sec$^2$. The tensile force is recorded as a function of the take-up speed of the nip rolls. Melt strength is reported, as the plateau force (cN), before the strand breaks. The following conditions are used in the melt strength measurements: plunger speed = 0.265 mm/sec; wheel acceleration = 2.4 mm/sec$^2$; capillary diameter = 2.0 mm; capillary length = 30 mm; and barrel diameter = 12 mm.

*Materials*

CBC1, CBC2 and CBC3 are crystalline block composites, that include 50 wt% of an ethylene-propylene copolymer (having an ethylene content of about 90 wt%) and 50 wt% of isotactic polypropylene.

CBC1, CBC2 and CBC3 are prepared by a process comprising contacting an addition polymerizable monomer or mixture of monomers under addition polymerization conditions with a composition comprising at least one addition polymerization catalyst, at least one cocatalyst, and a chain shuttling agent, said process being characterized by formation of at least some of the growing polymer chains under differentiated process conditions in two or more reactors operating under steady state polymerization conditions or in two or more zones of a reactor operating under plug flow polymerization conditions. The term, "shuttling agent" refers to a compound or mixture of compounds that is capable of causing polymeryl exchange between at least two active catalyst sites under the conditions of the polymerization. That is, transfer of a polymer fragment occurs both to and from one or more of the active catalyst sites. In contrast to a shuttling agent, a "chain transfer agent" causes termination of polymer chain growth and amounts to a one-time transfer of growing polymer from the catalyst to the transfer agent. In a preferred embodiment, the crystalline block composites comprise a fraction of block polymer which possesses a most probable distribution of block lengths.

Suitable processes useful in producing CBC1, CBC2, CBC3, and other crystalline block composites may be found, for example, in U.S. Patent Application Publication No. 2008/0269412, published on Oct. 30, 2008. In particular, the polymerization is desirably carried out as a continuous polymerization, preferably a continuous, solution polymerization, in which catalyst components, monomers, and optionally solvent, adjuvants, scavengers, and polymerization aids are continuously supplied to one or more reactors or zones and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. The chain shuttling agent(s) may be added at any point during the polymerization including in the first reactor or zone, at the exit or slightly before the exit of the first reactor, or between the first reactor or zone and the second or any subsequent reactor or zone. Due to the difference in monomers, temperatures, pressures or other difference in polymerization conditions between at least two of the reactors or zones connected in series, polymer segments of differing composition such as comonomer content, crystallinity, density, tacticity, regio-regularity, or other chemical or physical difference, within the same molecule are formed in the different reactors or zones. The size of each segment or block is determined by continuous polymer reaction conditions, and preferably is a most probable distribution of polymer sizes.

When producing a block polymer having a crystalline ethylene block (CEB) and a crystalline alpha-olefin block (CAOB) in two reactors or zones it is possible to produce the CEB in the first reactor or zone and the CAOB in the second reactor or zone or to produce the CAOB in the first reactor or zone and the CEB in the second reactor or zone. It may be more advantageous to produce CEB in the first reactor or zone with fresh chain shuttling agent added. The presence of increased levels of ethylene in the reactor or zone producing CEB may lead to much higher molecular weight in that reactor or zone than in the zone or reactor producing CAOB. The fresh chain shuttling agent will reduce the MW of polymer in the reactor or zone producing CEB thus leading to better overall balance between the length of the CEB and CAOB segments.

When operating reactors or zones in series it is necessary to maintain diverse reaction conditions such that one reactor produces CEB and the other reactor produces CAOB. Carryover of ethylene from the first reactor to the second reactor (in series) or from the second reactor back to the first reactor through a solvent and monomer recycle system is preferably minimized. There are many possible unit operations to remove this ethylene, but because ethylene is more volatile than higher alpha olefins one simple way is to remove much of the unreacted ethylene through a flash step by reducing the pressure of the effluent of the reactor producing CEB and flashing off the ethylene. An exemplary approach is to avoid additional unit operations and to utilize the much greater reactivity of ethylene versus higher alpha olefins such that the conversion of ethylene across the CEB reactor approaches 100%. The overall conversion of monomers across the reactors can be controlled by maintaining the alpha olefin conversion at a high level (90 to 95%).

Exemplary catalysts and catalyst precursors for use to from the crystalline block composite include metal complexes such as disclosed in, e.g., International Publication No WO 2005/090426. Other exemplary catalysts are also disclosed in U.S. Patent Publication Nos. 2006/0199930, 2007/0167578, and 2008/0311812; U.S. Patent No. 7,355,089; and International Publication No. WO 2009/012215.

The crystalline block composite is characterized as appropriate by Differential Scanning Calorimetry (DSC), $C^{13}$ Nuclear Magnetic Resonance (NMR), Gel Permeation Chromatography (GPC), and high temperature liquid chromatography (HTLC) fractionation. These are described in more detail in US Patent Application Publication Nos US2011-0082257, US2011-0082258 and US2011-0082249, all published on April 7, 2011 .

Sample composite components CBC 1, CBC 2, and CBC 3 are prepared with the reaction conditions of Table 1. The catalyst is ([[rel-2',2'''-[(1R,2R)-1,2-cylcohexanediylbis(methyleneoxy-κO)] bis[3-(9H-carbazol-9-yl)-5-methyl[1,1'-biphenyl]-2-olato-κO]](2-)]dimethyl-hafnium). Cocatalyst-1 is a mixture of methyldi(C14-18 alkyl)ammonium salts of tetrakis(pentafluorophenyl)borate, prepared by reaction of a long chain trialkylamine (Armeen™ M2HT, available from Akzo Nobel, Inc.), HCl and Li[B(C6F5)4], substantially as disclosed in U.S. Patent No. 5,919,9883, Ex. 2., which are purchased from Boulder Scientific and used without further purification. Cocatalyst-2 (modified methylalumoxane (MMAO)) are purchased from Akzo Nobel and used without further purification "DEZ" refers to chain shuttling agent diethylzinc.

Table 1

| Material | CBC1 | | CBC2 | | CBC3 | |
|---|---|---|---|---|---|---|
| Reactor | 1st Reactor | 2nd Reactor | 1st Reactor | 2nd Reactor | 1st Reactor | 2nd Reactor |
| Reactor Control Temp.(°C) | 153 | 130 | 153 | 136 | 159 | 127 |
| Solvent Feed (lb/hr) | 343 | 101 | 441 | 376 | 329 | 510 |
| Propylene Feed (lb/hr) | 3.40 | 44.1 | 6.9 | 77.0 | 3.87 | 58.1 |
| Ethylene Feed (lb/hr) | 47.1 | 0 | 70.6 | 0 | 47.31 | 0 |
| Hydrogen Feed SCCM) | 0 | 0 | 0 | 0 | 0 | 0 |
| Reactor Ethylene Cone. (g/L) | 2.06 | 0 | 1.68 | 0.02 | 2.35 | 0 |
| Reactor Propylene Cone. (g/L) | 0 | 2.42 | 0.34 | 2.95 | 0.12 | 6.52 |

(continued)

| Material | CBC1 | | CBC2 | | CBC3 | |
|---|---|---|---|---|---|---|
| Reactor | 1st Reactor | 2nd Reactor | 1st Reactor | 2nd Reactor | 1st Reactor | 2nd Reactor |
| Catalyst Efficiency (gPoly/gM) *1.0E6 | 0.247 | 0.14 | 0.21 | 0.09 | 0.13 | 0.28 |
| Catalyst Flow (lb/hr) | 0.31 | 0.53 | 0.73 | 1.65 | 1.96 | 0.91 |
| Catalyst Conc. (ppm) | 600 | 600 | 500 | 500 | 200 | 200 |
| Cocatalyst-1 Flow (lb/hr) | 0.62 | 0.53 | 0.73 | 1.65 | 1.96 | 0.97 |
| Cocatalyst-1 Conc. (ppm) | 2729 | 7082 | 4693 | 4693 | 2500 | 2500 |
| Cocatalyst-2 Flow (lb/hr) | 0.72 | 0.73 | 0.84 | 0.63 | 0.86 | 1.13 |
| Cocatatlyst-2 Conc. (ppm) | 3442 | 1893 | 1995 | 1995 | 2999 | 244 |
| DEZ Flow (lb/hr) | 1.49 | 0 | 2.34 | 0 | 0.98 | 0 |
| DEZ Conc. (ppm) | 30000 | 0 | 49989 | 0 | 79000 | 0 |

The measured properties of CBC1, CBC2 and CBC3 are provided in Table 2, below.

Table 2

| Material | MFR (230°C/ 2.16 kg) | wt% PP from HTLC Separation | Mw Kg/mol | Mw/Mn | Total wt% $C_2$ (NMR) | Tm (°C) Peak 1 (Peak 2) | Tc (°C) | Melt Enthalpy (J/g) | Crystalline Block Composite Index |
|---|---|---|---|---|---|---|---|---|---|
| CBC1 | 10.1 | 20.3 | 92 | 3.48 | 48.1 | 130 (105) | 90 | 103 | 0.566 |
| CBC2 | 37.6 | 14.8 | 73.9 | 3.74 | 46.7 | 130 (103) | 92 | 92 | 0.697 |
| CBC3 | 43.2 | 17.1 | 70.1 | 2.94 | 46.5 | 127 (106) | 90 | 93 | 0.658 |

*Crystalline Block Composite Index Calculations*

CBCI provides an estimate of the quantity of block copolymer within the block composite under the assumption that the ratio of CEB to CAOB within the diblock is the same as the ratio of ethylene to alpha-olefin in the overall block composite. This assumption is valid for these statistical olefin block copolymers based on the understanding of the individual catalyst kinetics and the polymerization mechanism for the formation of the diblocks via chain shuttling catalysis as described in the specification. This CBCI analysis shows that the amount of isolated PP is less than if the polymer was a simple blend of a propylene homopolymer (in this example the CAOP) and polyethylene (in this example the CEP). Consequently, the polyethylene fraction contains an appreciable amount of propylene that would not otherwise be present if the polymer was simply a blend of polypropylene and polyethylene. To account for this "extra propylene", a mass balance calculation can be performed to estimate the CBCI from the amount of the polypropylene and polyethylene fractions and the weight % propylene present in each of the fractions that are separated by HTLC. The corresponding CBCI calculations for CBC1, CBC2 and CBC3 are provided in Table 3, below.

Table 3

| Line # | Variable | Source | CBC1 | CBC2 | CBC3 |
|---|---|---|---|---|---|
| 1 | Overall wt% C3 Total | Measured | 51.9 | 52.4 | 53.5 |

(continued)

| Line # | Variable | Source | CBC1 | CBC2 | CBC3 |
|---|---|---|---|---|---|
| 2 | wt% C3 in PP block/polymer | Measured | 99.0 | 99.0 | 99.0 |
| 3 | wt% C3 in PE block/polymer | Measured | 10.5 | 8.0 | 8.0 |
| 4 | wt fraction PP (in block or polymer) | Eq. 2 below | 0.468 | 0.488 | 0.500 |
| 5 | wt fraction PE (in block or polymer) | 1-Line 4 | 0.532 | 0.512 | 0.500 |
| | Analysis of HTLC Separation | | | | |
| 6 | wt fraction isolated PP | Measured | 0.203 | 0.148 | 0.171 |
| 7 | wt fraction PE fraction | Measured | 0.797 | 0.852 | 0.829 |
| 8 | wt% C3 in PE-fraction | Eq. 4 below | 39.903 | 44.300 | 44.115 |
| 9 | wt fraction PP-diblock in PE fraction | Eq. 6 below | 0.332 | 0.399 | 0.397 |
| 10 | wt fraction PE in PE fraction | 1-Line 10 | 0.668 | 0.601 | 0.603 |
| 11 | wt fraction Diblock in PE fraction | 10/Line 4 | 0.710 | 0.818 | 0.794 |
| | | | | | |
| 12 | Crystalline Block Composite Index (CBCI) | Eq. 7 below | 0.566 | 0.697 | 0.658 |

Referring to Tables 2 and 3, above, the CBCI is measured by first determining a summation of the weight % propylene from each component in the polymer according to Equation 1, below, which results in the overall weight % propylene/C3 (of the whole polymer). This mass balance equation can be used to quantify the amount of the PP and PE present in the block copolymer. This mass balance equation can also be used to quantify the amount of PP and PE in a binary blend or extended to a ternary, or n-component blend. For the BCs and CBCs, the overall amount of PP or PE is contained within the blocks present in the block copolymer and the unbound PP and PE polymers.

$$\text{Wt \% C3}_{\text{Overall}} = \text{w}_{\text{PP}}(wt\%C3_{PP}) + \text{w}_{\text{PE}}(wt\%C3_{PE}) \qquad \text{Eq. 1}$$

where

$w_{pp}$ = weight fraction of PP in the polymer
$w_{PE}$ = weight fraction of PE in the polymer
$wt\%C3_{PP}$ = weight percent of propylene in PP component or block
$wt\%C3_{PE}$ = weight percent of propylene in PE component or block

Note that the overall weight % of propylene (C3) is measured from $C^{13}$ NMR or some other composition measurement that represents the total amount of C3 present in the whole polymer. The weight % propylene in the PP block (wt%C3pp) is set to 100 (if applicable) or if otherwise known from its DSC melting point, NMR measurement, or other composition estimate, that value can be put into its place. Similarly, the weight % propylene in the PE block (wt%C3$_{PE}$) is set to 100 (if applicable) or if otherwise known from its DSC melting point, NMR measurement, or other composition estimate, that value can be put into its place. The weight % of C3 is shown in Table 3.

Calculating the Ratio of PP to PE in the crystalline block composite and/or the specified block composite: Based on Equation 1, the overall weight fraction of PP present in the polymer can be calculated using Equation 2 from the mass balance of the total C3 measured in the polymer. Alternatively, it could also be estimated from a mass balance of the monomer and comonomer consumption during the polymerization. Overall, this represents the amount of PP and PE present in the polymer regardless of whether it is present in the unbound components or in the block copolymer. For a conventional blend, the weight fraction of PP and weight fraction of PE corresponds to the individual amount of PP and PE polymer present. For the crystalline block composite and the block composite, it is assumed that the ratio of the weight fraction of PP to PE also corresponds to the average block ratio between PP and PE present in this statistical block copolymer.

$$w_{PP} = \frac{wt\%C3_{Overall} - wt\%C3_{PE}}{wt\%C3_{PP} - wt\%C3_{PE}} \qquad \text{Eq. 2}$$

where

$w_{PP}$ = weight fraction of PP present in the whole polymer
$wt\%C3_{PP}$ = weight percent of propylene in PP component or block
$wt\%C3_{PE}$ = weight percent of propylene in PE component or block

To estimate the amount of the block copolymer (diblock) in the Crystalline Block Composite, apply Equations 3 through 5, and the amount of the isolated PP that is measured by HTLC analysis is used to determine the amount of polypropylene present in the diblock copolymer. The amount isolated or separated first in the HTLC analysis represents the 'unbound PP' and its composition is representative of the PP block present in the diblock copolymer. By substituting the overall weight % C3 of the whole polymer in the left hand side of Equation 3, and the weight fraction of PP (isolated from HTLC) and the weight fraction of PE (separated by HTLC) into the right hand side of Equation 3, the weight % of C3 in the PE fraction can be calculated using Equations 4 and 5. The PE fraction is described as the fraction separated from the unbound PP and contains the diblock and unbound PE. The composition of the isolated PP is assumed to be the same as the weight % propylene in the PP block as described previously.

$$wt\%C3_{Overall} = w_{PP\,isolated}\,(wt\%C3_{PP}) + w_{PE\text{-}fraction}\,(wt\%C3_{PE-fraction}) \qquad \text{Eq. 3}$$

$$wt\%C3_{PE-fraction} = \frac{wt\%C3_{Overall} - w_{PPisolated}\,(wt\%C3_{PP})}{w_{PE-fraction}} \qquad \text{Eq. 4}$$

$$w_{PE-fraction} = 1 - w_{PPisolated} \qquad \text{Eq. 5}$$

where

$w_{PPisolated}$ = weight fraction of isolated PP from HTLC
$w_{PE\text{-}fraction}$ = weight fraction of PE separated from HTLC, containing the diblock and unbound PE
$wt\%C3_{PP}$ = weight % of propylene in the PP; which is also the same amount of propylene present in the PP block and in the unbound PP
$wt\%C3_{PE\text{-}fraction}$ = weight % of propylene in the PE-fraction that was separated by HTLC
$wt\%C3_{Overall}$ = overall weight % propylene in the whole polymer

The amount of wt% C3 in the polyethylene fraction from HTLC represents the amount of propylene present in the block copolymer fraction that is above the amount present in the 'unbound polyethylene'. To account for the 'additional' propylene present in the polyethylene fraction, the only way to have PP present in this fraction is for the PP polymer chain to be connected to a PE polymer chain (or else it would have been isolated with the PP fraction separated by HTLC). Thus, the PP block remains adsorbed with the PE block until the PE fraction is separated.

The amount of PP present in the diblock is calculated using Equation 6.

$$w_{PP-diblock} = \frac{wt\%C3_{PE-fraction} - wt\%C3_{PE}}{wt\%C3_{PP} - wt\%C3_{PE}} \qquad \text{Eq. 6}$$

Where

$wt\%C3_{PE\text{-}fraction}$ = weight % of propylene in the PE-fraction that was separated by HTLC (Equation 4)
$wt\%C3_{PP}$ = weight % of propylene in the PP component or block (defined previously)
$wt\%C3_{PE}$ = weight % of propylene in the PE component or block (defined previously)
$w_{PP\text{-}diblock}$ = weight fraction of PP in the diblock separated with PE-fraction by HTLC

The amount of the diblock present in this PE fraction can be estimated by assuming that the ratio of the PP block to PE block is the same as the overall ratio of PP to PE present in the whole polymer. For example, if the overall ratio of PP to PE is 1:1 in the whole polymer, then it assumed that the ratio of PP to PE in the diblock is also 1:1. Thus, the weight fraction of diblock present in the PE fraction would be weight fraction of PP in the diblock ($w_{PP-diblock}$) multiplied by two. Another way to calculate this is by dividing the weight fraction of PP in the diblock ($w_{PP-diblock}$) by the weight fraction of PP in the whole polymer (Equation 2).

To further estimate the amount of diblock present in the whole polymer, the estimated amount of diblock in the PE fraction is multiplied by the weight fraction of the PE fraction measured from HTLC. To estimate the crystalline block composite index, the amount of diblock copolymer is determined by Equation 7. To estimate the CBCI, the weight fraction of diblock in the PE fraction calculated using Equation 6 is divided by the overall weight fraction of PP (as calculated in Equation 2) and then multiplied by the weight fraction of the PE fraction.

$$CBCI = \frac{w_{PP-diblock}}{w_{PP}} \cdot w_{PE-fraction} \qquad \text{Eq. 7}$$

Where

$w_{PP-diblock}$ = weight fraction of PP in the diblock separated with the PE-fraction by HTLC (Equation 6)

$w_{PP}$ = weight fraction of PP in the polymer

$w_{PE-fraction}$ = weight fraction of PE separated from HTLC, containing the diblock and unbound PE (Equation 5)

In addition to CBC1, CBC2, and CBC3, other materials used in the examples are provided in Table 4 below.

Table 4

| Material | Description |
|---|---|
| MAH-g-PE1 | maleic anhydride grafted polyethylene (AMPLIFY™ GR 204 from The Dow Chemical Company) (density = 0.953 g/cm$^3$; $I_2$ = 12; 1.2 weight percent maleic anhydride) |
| MAH-g-PE2 | maleic anhydride grafted polyethylene (Morton 100H from The Dow Chemical Company) (density = 0.965 g/cm$^3$; $I_2$ = 6; 2.4 weight percent maleic anhydride) |
| MAH-g-PE3 | maleic anhydride grafted polyethylene (XUS 69116.00 from The Dow Chemical Company) (density = 0.912 g/cm$^3$; $I_2$ = 2.1; 2.4 weight percent maleic anhydride) |
| LDPE 722 | low density polyethylene from The Dow Chemical Company (density = 0.918 g/cm$^3$; $I_2$ = 8.0 g/10 minutes) |
| LDPE 621i | low density polyethylene from The Dow Chemical Company (density = 0.918 g/cm$^3$; $I_2$ = 2.3 g/10 minutes) |
| LDPE 662i | low density polyethylene from The Dow Chemical Company (density = 0.919 g/cm$^3$; $I_2$ = 0.45 g/10 minutes) |
| POE1 | Ethylene octene copolymer (ENGAGE 8137 (0.864 g/cm$^3$; $I_2$ =13) |
| hPP1 | structurally isomeric modified propylene homopolymer (Daploy WF 420HMS from Borealis AG) (MFR @ 230° C and 2.16 kg = 22 g/10 minutes) |
| Irganox B 225 | antioxidant from BASF |
| Aluminum foil | 35 μm thickness from Hydro Aluminium Deutschland GmbH |

Rheological behavior

In this Example, a number of different tie layers are formulated and evaluated for rheological behavior for potential use in extrusion coating technology, for example.

Various tie layers are prepared for use in multilayer structures for this Example. Inventive Tie Layers 1-3 (formed from Tie Layer Resins 1-3 in Table 5 below) represent tie layers that can be used in some embodiments of multilayer structures of the present invention. Table 5 shows the composition of Comparative Tie Layer A (formed from Tie Layer Resin A) and Inventive Tie Layers 1-3, with all values being weight percentages based on the total weight of the composition.

Table 5

| Tie Layer Resin | CBC1 | CBC2 | MAH-g-PE1 | LDPE 722 | LDPE 621i | LDPE 662i | Irganox B 225 | MFR |
|---|---|---|---|---|---|---|---|---|
| A | 54.8 | | 25 | 20 | | | 0.2 | 8.4 |
| 1 | | 54.8 | 25 | | | 20 | 0.2 | 14.4 |
| 2 | | 54.8 | 25 | | 20 | | | 18.5 |
| 3 | | 54.8 | 25 | 20 | | | 0.2 | 20.4 |

The blends are compounded on a Haake Rheomix 3000 mixer rotating at 50 RPM. The mixer is preheated to 190°C, and the mixing is kept for 5 min after the ram is secured down. The melt flow rates are measured according to ASTM D1238 at 230° C and 2.16 kg.

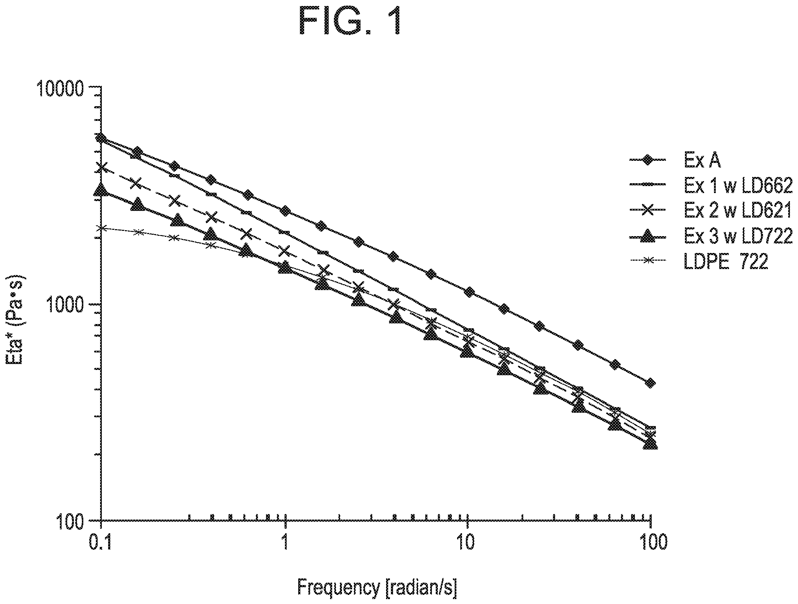

The shear rheology of Tie Layers A and 1-3, along with LDPE 722 (7 MI) is shown in Figure 1. The shear viscosity of the CBC2 based formulations (Inventive Tie Layers 1-3) show comparable values as to LDPE 722; however, the viscosity of CBC1 based formulation (Comparative Tie Layer A) is significantly higher. From a high speed extrusion coating perspective, the CBC2 (Inventive Tie Layers 1-3) based formulations are more preferred based only on rheology.

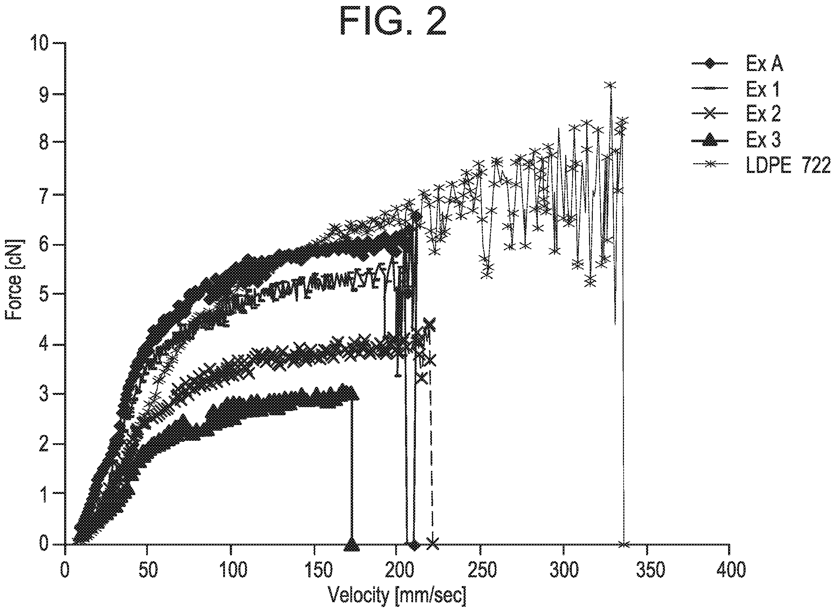

However, melt strength is another important factor. The melt strengths of the blends are measured as described in the Test Methods section above. Figure 2 shows the results of the melt strength measurements for the tie layers. The plateau melt strengths of Inventive Tie Layers 1-3 is lower than Comparative Tie Layer A and LDPE 722; however, the plateau melt strengths of Inventive Tie Layers 1-3 encompass a range of 2.5 to 5.0 cN and the velocities at break exceed 150 mm/sec, which are acceptable.

Extrusion Coating

*Compounding of tie layer formulations*

A number of Tie Layer Resins (set out in Table 6) are prepared for use as tie layers in an extrusion coating application. The Tie Layer Resin blends are compounded using a 25 mm twin screw extruder (a Leistritz machine). The extruder has eight heated zones. The following temperature settings are used in the extrusion process: Zones 1-8 are heated to 130, 200, 200, 190, 190, 190, 190 and 190°C. The drive unit for the extruder is run at 300 rpm. The extruder melt temperature ranges from 234 to 239 °C. The formulations that are compounded to form Tie Layer Resins 4-7 for use in Inventive Tie Layers 4-7 are shown in Table 6, with all values being weight percentages based on the total weight of the composition.

Table 6

| Tie Layer Resin | CBC3 | LDPE 621i | MAH-g-PE1 | MAH-g-PE2 | MAH-g-PE3 | POE1 |
|---|---|---|---|---|---|---|
| 4 | 60 | 20 | 20 | | | |
| 5 | 60 | 20 | | 20 | | |
| 6 | 60 | 25 | | | 15 | |
| 7 | 60 | 20 | | | 15 | 5 |

*Extrusion coating*

Two layer coextrusion coatings with a split of 15 g/m$^2$ from extruder 1 and 7 g/m$^2$ from extruder 2 were performed on a Davis Standard/Er-We-Pa extrusion coating line using a feed block system that combined the layers from extruder 1 and extruder 2. The feedblock is located between the adaptor and the die. Both extruders are at the same set temperature profile. The set temperature profile represented following temperature setting: Extruder - 200°C / 250°C / 280°C / 280°C / 280°C / 280°C; Flange/ Adapter/ Piping - 280°C (6 zones); feedblock - 280°C and Die - 280°C x 10 Zones.

The resin from extruder 1, which is a "3.5 inch" diameter screw with a length over diameter (L/D) ratio of 32, is coextruded with a resin extruded on extruder 2, which is a "2.5 inch" diameter screw, with a length over diameter (L/D) ratio of 30, and coated onto an aluminum substrate. The aluminum substrate is 35 microns in thickness and is supplied by Hydro Aluminium Deutschland GmbH. The resin extruded from extruder 2 is the tie layer or adhesive layer, which comes into contact with the aluminum substrate.

Melt pressure and melt temperature are recorded with thermocouples placed in the adapter. The melt is delivered through a Davis Standard/Er-We-Pa flex lip edge bead reduction die, Series 510A, nominally set to a die gap of 0.7 mm. The melt drawing and application of the melt vertically onto the moving substrate is performed at an air gap of 200 mm and a nip off-set of 15 mm, towards the pressure roll. The melt is applied onto the moving substrate in the laminator nip, which is the contact point of the pressure roll, with a rubber surface layer contacting the "water cooled" chill roll with a matte surface finish, and maintained at a temperature of 15°C to 20°C. The air gap is defined as the vertical distance between the die lip and the laminator nip. The nip off-set is defined as the horizontal off-set of the die lip position relative to the laminator nip.

Extrusion Coating Examples 8-11 are shown in Table 7. The extrusion coated structures have the following arrangement Layer 1/Layer 2/Substrate. The Tie Layer Resins referenced in Table 7 correspond with those described above. In Extrusion Coating Example 8, hPP1 is extruded in extruder 1 and Tie Layer Resin 4 in extruder 2 on the ER-We-PA extrusion coating line. As such, the aluminum foil substrate is coated with 7 $g/m^2$ Tie Layer Resin 4 as Layer 2 in coextrusion with 15 $g/m^2$ hPP1 as Layer 1. For Extrusion Coating Examples 9-11, Tie Layer Resins 5, 6 and 7 are extruded in both extruder 1 and extruder 2. The structures created are shown in Table 7. Line speeds of 50, 80 and 100 m/min are used as shown.

Table 7

| Extrusion Coating Example | Extruder 1 (Layer 1) 15 $g/m^2$ | Extruder 2 (Layer 2) 7 $g/m^2$ | Substrate (35 um) | Line speed (m/min) |
|---|---|---|---|---|
| 8 | hPP1 | Tie Laver Resin 4 | Aluminum foil | 100 |
| 9 | Tie Laver Resin 5 | Tie Laver Resin 5 | Aluminum foil | 80 |
| 10 | Tie Laver Resin 6 | Tie Laver Resin 6 | Aluminum foil | 50 |
| 11 | Tie Laver Resin 7 | Tie Laver Resin 7 | Aluminum foil | 50 |

The adhesion within each Extrusion Coating Examples is tested after storage for 48 hours at 23 °C, after 24 hours in an oven at 90 °C, and after 90 seconds in an oven at 250 °C. The adhesion of Inventive Tie Layer 4 (Inventive Tie Layer 4 is formed from Tie Layer Resin 4) to hPP1 is so strong that it is not possible to peel the hPP1 as Layer 1 from Inventive Tie Layer 4 as Layer 2. The adhesion of the Inventive Tie Layers 4, 5, 6 and 7 (corresponding to Tie Layer Resins 4, 5, 6, and 7, respectively) to the aluminum is low after storage of samples for 48 hours at 23°C and after storage for 24 hours in an oven at 90 °C. Following the heat treatment at 90 °C, an operator attempted to peel the Tie Layers from the aluminum substrate by hand. The Tie Layers peel off from the aluminum substrate with such a low force that no meaningful measurement can be taken using conventional testing equipment. However, after heat aging for 90 seconds in an oven at 250 °C, the adhesion of Tie Layers 4, 5, 6 and 7 to aluminum becomes so strong, that it is not possible to peel the Tie Layers off the aluminum by hand without destroying the aluminum, indicating a very strong adhesion. The adhesion results are summarized in Table 8.

Table 8

| Extrusion Coating Example | Adhesion to Alu after 48h at RT | Adhesion to Alu after 24h at 90°C | Adhesion to Alu 90s at 250°C |
|---|---|---|---|
| 8 | - | - | + |
| 9 | - | - | + |
| 10 | - | - | + |
| 11 | - | - | + |
| "-" indicates low adhesion that no reading could be taken "+" indicates strong adhesion that is not possible to peel the adhesive layer from the aluminum without destroying the aluminum | | | |

**Claims**

1. A multilayer structure comprising a polyolefin layer which is Layer A, a tie layer which is Layer B, and a barrier layer which is Layer C, each layer having opposing facial surfaces, wherein:

Layer A has a top facial surface and a bottom facial surface and comprises polypropylene;
Layer B has a top facial surface and a bottom facial surface and comprises:

a) a crystalline block copolymer composite (CBC) comprising:

i) a crystalline ethylene based polymer (CEP) comprising at least 90 mol % polymerized ethylene;
ii) an alpha-olefin-based crystalline polymer (CAOP); and
iii) a block copolymer comprising (a) a crystalline ethylene block (CEB) comprising at least 90 mol % polymerized ethylene and (b) a crystalline alpha-olefin block (CAOB);

b) maleic anhydride grafted polyethylene or maleic anhydride grafted polypropylene; and,
c) low density polyethylene; and,

Layer C comprises a metal foil and has a top facial surface and a bottom facial surface, the top facial surface of Layer C being in adhering contact with the bottom facial surface of Layer B, and the top facial surface of Layer B being in adhering contact with the bottom facial surface of Layer A;

wherein Layer B comprises 40 to 75 weight percent CBC based on the total weight of Layer B, 10 to 35 weight percent maleic anhydride grafted polyethylene based on the total weight of Layer B, and 15 to 40 weight percent low density polyethylene based on the total weight of Layer B.

2. The multilayer structure of claim 1, wherein the metal foil comprises aluminum foil, copper foil, gold foil, or tin foil.

3. The multilayer structure of any of the preceding claims, wherein Layer B comprises maleic anhydride grafted polyethylene, and wherein the polyethylene comprises linear low density polyethylene, low density polyethylene, or high density polyethylene.

4. The multilayer structure of any of the preceding claims, wherein the polypropylene in Layer A comprises polypropylene homopolymer or polypropylene copolymer.

5. The multilayer structure of any of the preceding claims, wherein Layer A further comprises less than 50 weight percent polyethylene based on the total weight of Layer A.

6. The multilayer structure of any of the preceding claims, wherein Layer B further comprises at least one of polypropylene, polyethylene, a polyolefin plastomer, or a polyolefin elastomer.

7. The multilayer structure of any of the preceding claims, wherein the thickness of Layer A is 10 to 100 microns, preferably 10 to 50 microns.

8. The multilayer structure of any of the preceding claims, wherein the thickness of Layer B is 4 to 20 microns.

9. The multilayer structure of any of the preceding claims, wherein the thickness of Layer C is 6 to 100 microns.

10. The multilayer structure of any of the preceding claims, wherein the CBC has a melt flow rate of at least 10 g/10 minutes; wherein melt flow rate is measured in accordance with ASTM D-1238 at 230 °C and at 2.16 kg.

11. The multilayer structure of any of the preceding claims, wherein the low density polyethylene has a melt index ($I_2$) of 0.45 to 10 g/10 minutes and a melt strength of 2 to 30 cN; wherein melt index ($I_2$) is measured in accordance with ASTM D-1238 at 190 °C and at 2.16 kg load.

12. The multilayer structure of any of the preceding claims, wherein Layer B comprises maleic anhydride grafted polyethylene having a grafted maleic anhydride level of 0.6-2.7 weight percent maleic anhydride based on the weight of the maleic anhydride grafted polyethylene.

13. The multilayer structure of any of the preceding claims, wherein Layer B comprises maleic anhydride grafted polyethylene having a melt index ($I_2$) of 2-15 g/10 minutes; wherein melt index ($I_2$) is measured in accordance with ASTM D-1238 at 190 °C and at 2.16 kg load.

**14.** A method of preparing the multilayer structure of claim 1, the method comprising: coextruding Layer A and Layer B onto Layer C.

**Patentansprüche**

**1.** Eine mehrschichtige Struktur, beinhaltend eine Polyolefinschicht, die Schicht A ist, eine Haftschicht, die Schicht B ist, und eine Barriereschicht, die Schicht C ist, wobei jede Schicht entgegengesetzte Seitenoberflächen aufweist, wobei:

Schicht A eine obere Seitenoberfläche und eine untere Seitenoberfläche aufweist und Polypropylen beinhaltet;
Schicht B eine obere Seitenoberfläche und eine untere Seitenoberfläche aufweist und Folgendes beinhaltet:

a) einen kristallinen Blockcopolymer-Verbundstoff (CBC), beinhaltend:

i) ein kristallines Polymer auf Ethylenbasis (CEP), das zu mindestens 90 Mol-% polymerisiertes Ethylen beinhaltet;
ii) ein kristallines Polymer auf alpha-Olefinbasis (CAOP); und
iii) ein Blockcopolymer, beinhaltend (a) einen kristallinen Ethylenblock (CEB), der zu mindestens 90 Mol-% polymerisiertes Ethylen beinhaltet, und (b) einen kristallinen alpha-Olefinblock (CAOB);

b) mit Maleinsäureanhydrid gepfropftes Polyethylen oder mit Maleinsäureanhydrid gepfropftes Polypropylen; und
c) Polyethylen niedriger Dichte; und

Schicht C eine Metallfolie beinhaltet und eine obere Seitenoberfläche und eine untere Seitenoberfläche aufweist, wobei die obere Seitenoberfläche von Schicht C in haftendem Kontakt mit der unteren Seitenoberfläche von Schicht B steht und die obere Seitenoberfläche von Schicht B in haftendem Kontakt mit der unteren Seitenoberfläche von Schicht A steht;
wobei Schicht B bezogen auf das Gesamtgewicht von Schicht B zu 40 bis 75 Gewichtsprozent CBC, bezogen auf das Gesamtgewicht von Schicht B zu 10 bis 35 Gewichtsprozent mit Maleinsäureanhydrid gepfropftes Polyethylen und bezogen auf das Gesamtgewicht von Schicht B zu 15 bis 40 Gewichtsprozent Polyethylen niedriger Dichte beinhaltet.

**2.** Mehrschichtige Struktur gemäß Anspruch 1, wobei die Metallfolie Aluminiumfolie, Kupferfolie, Goldfolie oder Zinnfolie beinhaltet.

**3.** Mehrschichtige Struktur gemäß einem der vorhergehenden Ansprüche, wobei Schicht B mit Maleinsäureanhydrid gepfropftes Polyethylen beinhaltet und wobei das Polyethylen lineares Polyethylen niedriger Dichte, Polyethylen niedriger Dichte oder Polyethylen hoher Dichte beinhaltet.

**4.** Mehrschichtige Struktur gemäß einem der vorhergehenden Ansprüche, wobei das Polypropylen in Schicht A Polypropylen-Homopolymer oder Polypropylen-Copolymer beinhaltet.

**5.** Mehrschichtige Struktur gemäß einem der vorhergehenden Ansprüche, wobei Schicht A ferner bezogen auf das Gesamtgewicht von Schicht A zu weniger als 50 Gewichtsprozent Polyethylen beinhaltet.

**6.** Mehrschichtige Struktur gemäß einem der vorhergehenden Ansprüche, wobei Schicht B ferner mindestens eines von Polypropylen, Polyethylen, einem Polyolefinplastomer oder einem Polyolefinelastomer beinhaltet.

**7.** Mehrschichtige Struktur gemäß einem der vorhergehenden Ansprüche, wobei die Dicke von Schicht A 10 bis 100 Mikrometer, vorzugsweise 10 bis 50 Mikrometer beträgt.

**8.** Mehrschichtige Struktur gemäß einem der vorhergehenden Ansprüche, wobei die Dicke von Schicht B 4 bis 20 Mikrometer beträgt.

**9.** Mehrschichtige Struktur gemäß einem der vorhergehenden Ansprüche, wobei die Dicke von Schicht C 6 bis 100 Mikrometer beträgt.

**10.** Mehrschichtige Struktur gemäß einem der vorhergehenden Ansprüche, wobei der CBC eine Schmelzflussrate von mindestens 10 g/10 Minuten aufweist; wobei die Schmelzflussrate entsprechend ASTM D-1238 bei 230 °C und bei 2,16 kg gemessen wird.

**11.** Mehrschichtige Struktur gemäß einem der vorhergehenden Ansprüche, wobei das Polyethylen niedriger Dichte einen Schmelzindex ($I_2$) von 0,45 bis 10 g/10 Minuten und eine Schmelzefestigkeit von 2 bis 30 cN aufweist; wobei der Schmelzindex ($I_2$) entsprechend ASTM D-1238 bei 190 °C und bei 2,16 kg Belastung gemessen wird.

**12.** Mehrschichtige Struktur gemäß einem der vorhergehenden Ansprüche, wobei Schicht B mit Maleinsäureanhydrid gepfropftes Polyethylen beinhaltet, das ein Niveau von gepfropftem Maleinsäureanhydrid von 0,6-2,7 Gewichtsprozent Maleinsäureanhydrid, bezogen auf das Gewicht des mit Maleinsäureanhydrid gepfropften Polyethylens, aufweist.

**13.** Mehrschichtige Struktur gemäß einem der vorhergehenden Ansprüche, wobei Schicht B mit Maleinsäureanhydrid gepfropftes Polyethylen mit einem Schmelzindex ($I_2$) von 2-15 g/10 Minuten beinhaltet; wobei der Schmelzindex ($I_2$) entsprechend ASTM D-1238 bei 190 °C und bei 2,16 kg Belastung gemessen wird.

**14.** Ein Verfahren zum Herstellen der mehrschichtigen Struktur gemäß Anspruch 1, wobei das Verfahren Folgendes beinhaltet: Coextrudieren von Schicht A und Schicht B auf Schicht C.

**Revendications**

**1.** Une structure multicouche comprenant une couche de polyoléfine qui est la Couche A, une couche de liaison qui est la Couche B, et une couche barrière qui est la Couche C, chaque couche ayant des surfaces faciales opposées, dans laquelle :

la Couche A a une surface faciale supérieure et une surface faciale inférieure et comprend du polypropylène ;
la Couche B a une surface faciale supérieure et une surface faciale inférieure et comprend :

a) un composite de copolymère à blocs cristallins (CBC) comprenant :

i) un polymère à base d'éthylène cristallin (CEP) comprenant au moins 90 % en moles d'éthylène polymérisé ;
ii) un polymère cristallin à base d'alpha-oléfine (CAOP) ; et
iii) un copolymère à blocs comprenant (a) un bloc d'éthylène cristallin (CEB) comprenant au moins 90 % en moles d'éthylène polymérisé et (b) un bloc d'alpha-oléfine cristallin (CAOB) ;

b) du polyéthylène greffé avec de l'anhydride maléique ou du polypropylène greffé avec de l'anhydride maléique ; et,
c) du polyéthylène basse densité ; et,

la Couche C comprend une feuille de métal et a une surface faciale supérieure et une surface faciale inférieure, la surface faciale supérieure de la Couche C étant en contact adhésif avec la surface faciale inférieure de la Couche B, et la surface faciale supérieure de la Couche B étant en contact adhésif avec la surface faciale inférieure de la Couche A ;
dans laquelle la Couche B comprend de 40 à 75 pour cent en poids de CBC rapporté au poids total de la Couche B, de 10 à 35 pour cent en poids de polyéthylène greffé avec de l'anhydride maléique rapporté au poids total de la Couche B, et de 15 à 40 pour cent en poids de polyéthylène basse densité rapporté au poids total de la Couche B.

**2.** La structure multicouche de la revendication 1, dans laquelle la feuille de métal comprend une feuille d'aluminium, une feuille de cuivre, une feuille d'or, ou une feuille d'étain.

**3.** La structure multicouche de n'importe lesquelles des revendications précédentes, dans laquelle la Couche B comprend du polyéthylène greffé avec de l'anhydride maléique, et dans laquelle le polyéthylène comprend du polyéthylène basse densité linéaire, du polyéthylène basse densité, ou du polyéthylène haute densité.

**4.** La structure multicouche de n'importe lesquelles des revendications précédentes, dans laquelle le polypropylène dans la Couche A comprend un homopolymère de polypropylène ou un copolymère de polypropylène.

**5.** La structure multicouche de n'importe lesquelles des revendications précédentes, dans laquelle la Couche A comprend en sus moins de 50 pour cent en poids de polyéthylène rapporté au poids total de la Couche A.

**6.** La structure multicouche de n'importe lesquelles des revendications précédentes, dans laquelle la Couche B comprend en sus au moins un élément parmi le polypropylène, du polyéthylène, un plastomère de polyoléfine, ou un élastomère de polyoléfine.

**7.** La structure multicouche de n'importe lesquelles des revendications précédentes, dans laquelle l'épaisseur de la Couche A va de 10 à 100 microns, de préférence de 10 à 50 microns.

**8.** La structure multicouche de n'importe lesquelles des revendications précédentes, dans laquelle l'épaisseur de la Couche B va de 4 à 20 microns.

**9.** La structure multicouche de n'importe lesquelles des revendications précédentes, dans laquelle l'épaisseur de la Couche C va de 6 à 100 microns.

**10.** La structure multicouche de n'importe lesquelles des revendications précédentes, dans laquelle le CBC a un indice de fluidité à chaud d'au moins 10 g/10 minutes ; dans laquelle l'indice de fluidité à chaud est mesuré conformément à l'ASTM D-1238 à 230 °C et à 2,16 kg.

**11.** La structure multicouche de n'importe lesquelles des revendications précédentes, dans laquelle le polyéthylène basse densité a un indice de fluidité à l'état fondu ($I_2$) allant de 0,45 à 10 g/10 minutes et une résistance à l'état fondu allant de 2 à 30 cN ; dans laquelle l'indice de fluidité à l'état fondu ($I_2$) est mesuré conformément à l'ASTM D-1238 à 190 °C et à 2,16 kg de charge.

**12.** La structure multicouche de n'importe lesquelles des revendications précédentes, dans laquelle la Couche B comprend du polyéthylène greffé avec de l'anhydride maléique ayant un niveau d'anhydride maléique greffé allant de 0,6 à 2,7 pour cent en poids d'anhydride maléique rapporté au poids du polyéthylène greffé avec de l'anhydride maléique.

**13.** La structure multicouche de n'importe lesquelles des revendications précédentes, dans laquelle la Couche B comprend du polyéthylène greffé avec de l'anhydride maléique ayant un indice de fluidité à l'état fondu ($I_2$) allant de 2 à 15 g/10 minutes ; dans laquelle l'indice de fluidité à l'état fondu ($I_2$) est mesuré conformément à l'ASTM D-1238 à 190 °C et à 2,16 kg de charge.

**14.** Un procédé de préparation de la structure multicouche de la revendication 1, le procédé comprenant : la coextrusion de la Couche A et de la Couche B sur la Couche C.

FIG. 1

EP 3 526 033 B1

# FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015102991 A
- US 4599392 A
- US 5272236 A
- US 5278272 A
- US 5582923 A
- US 5733155 A
- US 3645992 A
- US 4076698 A
- US 3914342 A
- US 5854045 A
- US 5504172 A
- WO 0001745 A
- US 7199203 B
- US 6960635 B
- US 6525157 B
- US 7897689 B
- US 20110313106
- US 20110313107 A
- US 20110313108 A
- WO 2014043522A1 A
- US 5986028 A
- US 20080269412
- WO 2005090426 A
- US 20060199930 A
- US 20070167578 A
- US 20080311812 A
- US 7355089 B
- WO 2009012215 A
- US 20110082257 A
- US 20110082258 A
- US 20110082249 A
- US 59199883 B

**Non-patent literature cited in the description**

- Polymer Handbook. Wiley, 1999, 1-76
- LEE, D. ; MILLER, M. D. ; MEUNIER, D. M. ; LYONS, J. W. ; BONNER, J. M. ; PELL, R. J. ; SHAN, C. L. P. ; HUANG, T. 1218. *J. Chromatogr. A,* 2011, 7173
- BRUN, Y. ; FOSTER, P. *J. Sep. Sci.,* 2010, vol. 33, 3501
- WILLIAMS ; WARD. *J. Polym. Sci.. Polym. Let.,* 1968, vol. 6, 621